# EUROPEAN PATENT SPECIFICATION

(11) **EP 4 396 788 B1**
(45) Date of publication and mention of the grant of the patent: **24.12.2025**
(21) Application number: 22863702.1
(22) Date of filing: 29.08.2022
(51) Int. Cl.: G06V 10/42, G06V 10/74, G06V 10/24, G06V 10/44, G06V 10/82, G06V 10/12, G06T 7/38, G06T 7/33, G06T 3/00

(54) **A METHOD, A MOBILE USER DEVICE AND A SYSTEM FOR IDENTIFYING AUTHENTICITY OF A CYLINDRICAL OBJECT**
VERFAHREN, MOBILE BENUTZERVORRICHTUNG UND SYSTEM ZUR IDENTIFIZIERUNG DER AUTHENTIZITÄT EINES ZYLINDRISCHEN OBJEKTS
PROCÉDÉ, DISPOSITIF UTILISATEUR MOBILE ET SYSTÈME D'IDENTIFICATION DE L'AUTHENTICITÉ D'UN OBJET CYLINDRIQUE

(30) Priority: 30.08.2021 FI 20215906
(43) Date of publication of application: 10.07.2024
(73) Proprietor: Truemed Oy, 02150 Espoo (FI)
(72) Inventor: KANNAS, Tuomas, 02150 Espoo (FI); RAITIO, Ville, 02150 Espoo (FI); HEIKEL, Oskari, 02150 Espoo (FI); PALOHEIMO, Olli, 02150 Espoo (FI); BERG, Jyrki, 02150 Espoo (FI); PICCININI, Nicola, 02150 Espoo (FI); LATVALA, Hemmo, 02150 Espoo (FI); NAZARBEIGI, Amir, 02150 Espoo (FI)
(74) Representative: Primrose Oy
(86) International application number: PCT/FI2022/050556
(87) International publication number: WO 2023/031510

(56) References cited:
- EP-A1- 3 399 463
- WO-A1-2016/144429
- WO-A1-2016/144429
- WO-A2-2013/113007
- WO-A2-2013/113007
- US-A1- 2020 257 917
- US-A1- 2020 257 917
- US-A1- 2020 356 813

## Description

### FIELD OF THE INVENTION

The present invention relates to a method for identifying authenticity of a cylindrical object and more particularly to a method according to preamble of claim 1. The present invention also relates to a mobile user device for identifying authenticity of a cylindrical object and more particularly to a system according to preamble of claim 11. The present invention also relates to a system for identifying authenticity of a cylindrical object and more particularly to a system according to preamble of claim 13.

### BACKGROUND OF THE INVENTION

Conventionally identifying authenticity of objects or products is carried out by adding identification markers or tags to the objects and products. However, these added markers or tags require additional work for providing them to the objects and products. Furthermore, the added markers or tags also require additional inspection or monitoring methods for detecting them.

There are authenticity identification methods which are based on also image recognition. These methods are usually comprise taking an image of each original product and storing to images of the original product to a database. Then, for example when the product is sold, an image is taken from the sold product and this image is matched with corresponding one of the images in the database to identify which of the original products is sold. This is very work intensive as an image needs to be taken from each of the original products.

Further, in the prior art methods and systems, the images used in image recognition represent view angle or projection of the product. The disadvantage is that for reliable and detailed identification of authenticity, all images should cover all relevant view angles or projections such that the product may be analysed from all directions. This is especially difficult cylindrical objects having curved cross-sections, as in this kinds of objects there are no planar surfaces to be analysed.

The following prior art is acknowledged:WO 2013/113007 A2 (BRUNNER ALEXANDER [US]; SMITH SIDNEY TREY [US] ET AL.) 1 August 2013 (2013-08-01)

EP 3 399 463 A1 (ARES TRADING SA [CH]) 7 November 2018 (2018-11-07)

WO 2016/144429 A1 (CARE ZONE INC [US]) 15 September 2016 (2016-09-15)

US 2020/257917 A1 (MOORE LIAM [IE] ET AL) 13 August 2020 (2020-08-13)

### BRIEF DESCRIPTION OF THE INVENTION

An object of the present invention is to provide a method, mobile user device and system so as to solve or at least alleviate the prior art disadvantages.

The objects of the invention are achieved by a method which is characterized by what is stated in the independent claim 1. The objects of the present invention are further achieved by a mobile user device which is characterized by what is stated in the independent claim 11. The objects of the present invention are also achieved by an electronic identification system which is characterized by what is stated in the independent claim 13.

The preferred embodiments of the invention are disclosed in the dependent claims.

The present invention is based on the idea of providing a method for identifying authenticity of a cylindrical object having a cylinder axis from photographic images.

In the context of this application term cylindrical object means any object having cylinder axis and curved or curvilinear cross-section in a direction perpendicular to the cylinder axis. Accordingly, the cylindrical object may be for example an object having axial symmetry in relation to the cylinder axis, such as a circular cylinder or some other axial symmetry cylinder. Further, the cylindrical object may be for example an object having elliptic cross-section perpendicular to the cylinder axis, or some other curvilinear cross-section. The cylindrical object may also be a conical cylinder such a cone or a truncated cone. The cylindrical object may be a bottle, a vial, a can, cylindrical packaging or the like.

The method of the present invention comprises rotating the cylindrical object and imaging device in relation to each other around the cylinder axis of the cylindrical object and the method further comprises the following steps carried out by an electronic identification system having one or more processors and at least one memory storing instructions for execution by the one or more processors. The electronic identification system being configured to:
- a) acquiring two or more photographic images of the cylindrical object from different angles around the cylinder axis with an imaging device;
- b) generating a target image from the two or more photographic images by image stitching;
- c) analysing the target image in relation to a reference image representing an original cylindrical object and generating an identification output based on the analysing; and
- d) generating an authenticity identification indication based on the identification output.

Accordingly, in the present invention two or more photographic images are taken of the cylindrical object from different angles or directions around the cylinder axis. Then one target image is generated from the two or more photographic images. The target image is further analysed in relation to a reference image representing an original cylindrical object. Thus, only one image needs to be analysed in relation one reference image. Authenticity of the cylindrical object may be analysed around the cylinder axis with only one target image. Reliable analysis is achieved when the one target image is analysed in relation to the one reference image.

In the present application the reference image may be a photographic image of an original cylindrical object, or digital model, print file, or the like representing the original cylindrical object.

The imaging device is digital imaging device, such as digital camera or the like comprising an imaging sensor and a lens. The digital camera may be separate digital camera or a mobile user device such as mobile phone, computer, laptop, tablet computer.

The relative rotation of the imaging device and the cylindrical object around the cylinder axis means only the imaging device may be rotated around the cylindrical object and the cylinder axis and the imaging devices is kept still, or the imaging is kept still, and the cylindrical object is rotated around the cylinder axis. Alternatively, the relative rotation means that both the imaging device is be rotated around the cylindrical object and the cylinder axis and the cylindrical object is also rotated around the cylinder axis in the same or opposite direction than the imaging device.

In one embodiment, the step a) comprises and the electronic identification system is configured to acquiring the two or more photographic images of the cylindrical object around the cylinder axis from directions transversal to the cylinder axis with the imaging device along the rotation of the cylindrical object and imaging device in relation to each other around the cylinder axis of the cylindrical object.

Thus, the photographic images are taken during the relative rotation in a direction transversal to the cylinder axis from different angles or rotation angles of the cylindrical object for generating the target image.

In an alternative embodiment, the step a) comprises and the electronic identification system is configured to automatically acquiring the two or more photographic images of the cylindrical object around the cylinder axis from directions transversal to the cylinder axis with the imaging device along the rotation of the cylindrical object and the imaging device in relation to each other around the cylinder axis of the cylindrical object.

Thus, the photographic images are taken automatically during the relative rotation by the electronic identification system in a direction transversal to the cylinder axis from different angles or rotation angles of the cylindrical object for generating the target image.

Preferably, the photographic images are taken automatically during the relative rotation by the electronic identification system in a direction perpendicular to the cylinder axis from different angles or rotation angles of the cylindrical object for generating the target image. Therefore, the view angle of the imaging device to the cylindrical object is transversal to the cylinder axis or perpendicular to the cylinder axis.

Further, the step a) comprises and the electronic identification system is configured to automatically acquiring the two or more two-dimensional photographic images of the three-dimensional cylindrical object around the cylinder axis from directions transversal to the cylinder axis with the imaging device along or during the rotation of the cylindrical object and the imaging device in relation to each other around the cylinder axis of the cylindrical object.

The view angle means direction of the sensor of the imaging device in relation to the cylindrical object. When the sensor is directed perpendicular to the cylinder axis of the cylindrical object the cylindrical object represented as a front projection image. Thus, the photographic image provides a front projection image of the cylindrical object. Accordingly, the photographic image is not perspective image of the cylindrical object.

Accordingly, step a) and the electronic identification system is configured to automatically acquire two or more two-dimensional photographic images of the three-dimensional cylindrical object around the cylinder axis from directions transversal to the cylinder axis in order to generate one two-dimensional target image from the two or more two-dimensional photographic images by image stitching.

The two-dimensional target image is configured to represent the three-dimensional cylindrical object or part thereof.

In one embodiment, the step a) comprises and the electronic identification system is configured to carry out the following steps two or more times:
- acquiring a photographic image of the cylindrical object from the direction transversal to the cylinder axis with the imaging device;
- detecting one or more keypoints in the photographic image;
- tracking the one or more detected keypoints during the relative rotation of the cylindrical object and the imaging device around the cylinder axis of the cylindrical object;
- calculating displacement of the one or more detected keypoints due to the relative rotation during the tracking; and
- acquiring a new photographic image of the cylindrical object from the direction transversal to the cylinder axis with the imaging device when the calculated displacement corresponds a pre-determined displacement value.

This embodiment provides an automatic method for acquiring the two or more photographic images. Keypoints detection and tracking further enable the two or more photographic images to be taken without additional means.

In one embodiment, the step a) comprises and the electronic identification system is configured to
- a1) acquiring a first photographic image of the cylindrical object from the direction transversal to the cylinder axis with the imaging device;
- a2) detecting one or more first keypoints in the first photographic image;
- a3) tracking the one or more first detected keypoints during the relative rotation of the cylindrical object and the imaging device in relation to each other around the cylinder axis of the cylindrical object;
- a4) calculating displacement of the one or more first detected keypoints due to the relative rotation during the tracking; and
- a5) acquiring a second photographic image of the cylindrical object from the direction transversal to the cylinder axis with the imaging device when the calculated displacement of the one or more first detected keypoints corresponds a pre-determined displacement value.

The second photographic image is automatically taken when the first keypoints are displaced the pre-determined amount due to the relative rotation.

In another embodiment, the step a) comprises and the electronic identification system is configured to
- a1) acquiring a first photographic image of the cylindrical object from the direction transversal to the cylinder axis with the imaging device;
- a2) detecting one or more first keypoints in the first photographic image;
- a3) tracking the one or more first detected keypoints during the relative rotation of the cylindrical object and the imaging device in relation to each other around the cylinder axis of the cylindrical object;
- a4) calculating displacement of the one or more first detected keypoints due to the relative rotation during the tracking;
- a5) acquiring a second photographic image of the cylindrical object from the direction transversal to the cylinder axis with the imaging device when the calculated displacement of the one or more first detected keypoints corresponds a pre-determined displacement value;
- a6) detecting one or more second keypoints in the second photographic image;
- a7) tracking the one or more second detected keypoints during the relative rotation of the cylindrical object and the imaging device in relation to each other around the cylinder axis of the cylindrical object;
- a8) calculating displacement of the one or more second detected keypoints (64) due to the relative rotation during the tracking; and
- a9) acquiring a subsequent photographic image of the cylindrical object from the direction transversal to the cylinder axis with the imaging device when the calculated displacement of the one or more second detected keypoints corresponds the pre-determined displacement value.

The second and subsequent photographic images are automatically taken when the keypoints are displaced the pre-determined amount due to the relative rotation.

In another embodiment, the step a) comprises and the electronic identification system is configured to
- a1) acquiring a first photographic image of the cylindrical object from the direction transversal to the cylinder axis with the imaging device;
- a2) detecting one or more first keypoints in the first photographic image;
- a3) tracking the one or more first detected keypoints during the relative rotation of the cylindrical object and the imaging device in relation to each other around the cylinder axis of the cylindrical object; and
- a4) calculating displacement of the one or more first detected keypoints due to the relative rotation during the tracking;
- a5) acquiring a second photographic image of the cylindrical object from the direction transversal to the cylinder axis with the imaging device when the calculated displacement of the one or more first detected keypoints corresponds a pre-determined displacement value;
- a6) detecting one or more second keypoints in the second photographic image;
- a7) tracking the one or more second detected keypoints during the relative rotation of the cylindrical object and the imaging device in relation to each other around the cylinder axis of the cylindrical object;
- a8) calculating displacement of the one or more second detected keypoints due to the relative rotation during the tracking; and
- a9) acquiring a subsequent photographic image of the cylindrical object from the direction transversal to the cylinder axis with the imaging device when the calculated displacement of the one or more second detected keypoints corresponds the pre-determined displacement value; and
- a10) repeating the following steps one or more times:
   - detecting one or more subsequent keypoints in the subsequent photographic image;
   - rotating the cylindrical object and the imaging device in relation to each other around the cylinder axis of the cylindrical object;
   - tracking the one or more subsequent detected keypoints during the relative rotation of the cylindrical object and the imaging device in relation to each other around the cylinder axis of the cylindrical object;
   - calculating displacement of the one or more subsequent detected keypoints due to the relative rotation during the tracking; and
   - acquiring a new subsequent photographic image of the cylindrical object from the direction transversal to the cylinder axis with the imaging device when the calculated displacement of the one or more subsequent detected keypoints corresponds the pre-determined displacement value.

A pre-determined or desired number of photographic images are automatically taken successively when the keypoints are displaced the pre-determined amount due to the relative rotation.

In one embodiment, the step a) comprises and the electronic identification system is configured to
- a11) detecting side borders of the cylindrical object during the relative rotation of the cylindrical object and imaging device;
- a12) acquiring a first photographic image of the cylindrical object from the direction transversal to the cylinder axis with the imaging device;
- a13) detecting one or more first keypoints in the first photographic image;
- a14) tracking the one or more first detected keypoints during the relative rotation of the cylindrical object and the imaging device in relation to the detected side borders;
- a15) calculating displacement of the one or more first detected keypoints in relation to the detected side borders of the cylindrical object due to the relative rotation during the tracking; and
- a16) acquiring a second photographic image of the cylindrical object from the direction transversal to the cylinder axis with the imaging device when the calculated displacement of the one or more first detected keypoints corresponds a pre-determined displacement value.

The second photographic image is acquired automatically when the first keypoints are displaced a pre-determined displacement distance or value in relation to the side borders of the cylindrical object.

In another embodiment, the step a) comprises and the electronic identification system is configured to
- a11) detecting side borders of the cylindrical object during the relative rotation of the cylindrical object and imaging device;
- a12) acquiring a first photographic image of the cylindrical object from the direction transversal to the cylinder axis with the imaging device;
- a13) detecting one or more first keypoints in the first photographic image;
- a14) tracking the one or more first detected keypoints during the relative rotation of the cylindrical object and the imaging device in relation to the detected side borders;
- a15) calculating displacement of the one or more first detected keypoints in relation to the detected side borders of the cylindrical object due to the relative rotation during the tracking;
- a16) acquiring a second photographic image of the cylindrical object from the direction transversal to the cylinder axis with the imaging device when the calculated displacement of the one or more first detected keypoints corresponds a pre-determined displacement value;
- a17) detecting one or more second keypoints in the second photographic image;
- a18) tracking the one or more second detected keypoints during the relative rotation of the cylindrical object and the imaging device in relation to the detected side borders;
- a19) calculating displacement of the one or more second detected keypoints in relation to the detected side borders of the cylindrical object due to the relative rotation during the tracking; and
- a20) acquiring a subsequent photographic image of the cylindrical object from the direction transversal to the cylinder axis with the imaging device when the calculated displacement of the one or more second detected keypoints corresponds the pre-determined displacement value.

The second and subsequent photographic images are acquired automatically when the first and second keypoints are respectively displaced a pre-determined displacement distance or value in relation to the side borders of the cylindrical object.

In another embodiment, the step a) comprises and the electronic identification system is configured to
- a11) detecting side borders of the cylindrical object during the relative rotation of the cylindrical object and imaging device;
- a12) acquiring a first photographic image of the cylindrical object from the direction transversal to the cylinder axis with the imaging device;
- a13) detecting one or more first keypoints in the first photographic image;
- a14) tracking the one or more first detected keypoints during the relative rotation of the cylindrical object and the imaging device in relation to the detected side borders;
- a15) calculating displacement of the one or more first detected keypoints in relation to the detected side borders of the cylindrical object due to the relative rotation during the tracking;
- a16) acquiring a second photographic image of the cylindrical object from the direction transversal to the cylinder axis with the imaging device when the calculated displacement of the one or more first detected keypoints corresponds a pre-determined displacement value;
- a17) detecting one or more second keypoints in the second photographic image;
- a18) tracking the one or more second detected keypoints during the relative rotation of the cylindrical object and the imaging device in relation to the detected side borders;
- a19) calculating displacement of the one or more second detected keypoints in relation to the detected side borders of the cylindrical object due to the relative rotation during the tracking;
- a20) acquiring a subsequent photographic image of the cylindrical object from the direction transversal to the cylinder axis with the imaging device when the calculated displacement of the one or more second detected keypoints corresponds the pre-determined displacement value; and
- a21) repeating the following steps one or more times:
   - detecting one or more subsequent keypoints in the subsequent photographic image;
   - rotating the cylindrical object and the imaging device in relation to each other around the cylinder axis of the cylindrical object;
   - tracking the one or more subsequent detected keypoints during the relative rotation of the cylindrical object and the imaging device in relation to the detected side borders;
   - calculating displacement of the one or more subsequent detected keypoints in relation to the detected side borders of the cylindrical object due to the relative rotation during the tracking; and
   - acquiring a new subsequent photographic image of the cylindrical object from the direction transversal to the cylinder axis with the imaging device when the calculated displacement of the one or more subsequent detected keypoints corresponds the pre-determined displacement value.

In all the embodiments, electronic identification system may be configured to detect any other or all borders of the cylindrical object in the photographic images instead of or in addition to the side borders, and to calculate displacement of the one or more second detected keypoints in relation to the detected any other or all borders of the cylindrical object due to the relative rotation during the tracking.

The electronic identification system is provided with a keypoints or feature detection algorithm which in configured to the detect the keypoints and the borders.

The photographic images are acquired automatically when the first and second keypoints are respectively displaced a pre-determined displacement distance or value in relation to the side borders of the cylindrical object.

The distortions in the photographic images increase towards the side borders of the cylindrical object due to the curved shape of the cylindrical object. Thus, distortions may be kept low, and the photographic images may be taken such that the new photographic image is taken when the keypoints are displaced to a pre-determined distance from the side borders due to the relative rotation.

In some embodiment the pre-determined displacement value of the keypoints is determined based on diameter of the cylindrical object.

In some alternative embodiment, the pre-determined displacement value is determined based on minimum diameter, or maximum diameter or average diameter of the cylindrical object. This is especially relevant when the cylindrical object has varying diameter in a direction perpendicular to the cylinder axis.

In further alternative embodiment, the pre-determined displacement value is determined based on the diameter of the cylindrical object such that the pre-determined displacement value is inversely proportional to the diameter of cylindrical object. The distortions of the cylindrical object in the photographic images increase close towards the side borders of the cylindrical object, when the diameter in the direction perpendicular to the cylinder axis of the cylindrical object is smaller. Thus, more images are needed when diameter becomes smaller, and the pre-determined displacement value becomes smaller.

In some embodiments, the pre-determined displacement corresponds between 10 to 40 degrees around the cylinder axis of the cylindrical object.

In some alternative embodiments, the pre-determined displacement corresponds between 15 to 35 degrees around the cylinder axis of the cylindrical object.

The diameter of the cylindrical object may be pre-determined or inputted by the user via a user interface of the user device or the electronic identification system.

Alternatively, diameter of the cylindrical object is calculated by the imaging device, the user device of the electronic identification system. The electronic identification system, the user device of the electronic identification system is configured to detect side borders of the cylindrical object in the photographic image with a keypoint or feature detection algorithm. The side borders extending in direction parallel to or along the cylinder axis. The diameter of the cylindrical object is calculated based on the detected side borders of the cylindrical object in the photographic image.

In some embodiments, the imaging device comprises an image sensor configured to measure or calculate image taking distance value, meaning distance between the image sensor and the cylindrical object, upon acquiring the photographic image. The diameter of the cylindrical object may then be calculated based on the detected side borders of the cylindrical object in the photographic image and the image taking distance value.

In some embodiment, the imaging device is configured to determine a sensor center point X in the photographic image. The diameter of the cylindrical object may then be calculated based on the detected side borders of the cylindrical object in the photographic image and the sensor centre point in the photographic image. Alternatively, the diameter of the cylindrical object may then be calculated based on the detected side borders of the cylindrical object in the photographic image, the image taking distance value the sensor centre point in the photographic image.

In one embodiment, the electronic identification system is configured to carry out the step a) over an angle of at least 75 degrees around the cylinder axis.

In an alternative embodiment, the electronic identification system is configured to carry out the step a) over an angle between 90 to 360 degrees around the cylinder axis.

In an alternative embodiment, the electronic identification system is configured to carry out the step a) over an angel between 180 to 360 degrees around the cylinder axis.

Accordingly, a portion of the cylindrical object around the cylindrical axis which is not visible from only one view angle is photographed by acquiring the two or more photographic images.

In some embodiments, the electronic identification system or the user device or the imaging device is configured to utilize a flashlight of the imaging device in step a) upon acquiring the two or more photographic image of the cylindrical object with the imaging device.

Use of the flashlight enables neutralizing or equalizing light conditions between the two or more photographic images.

For carrying step b) and generating the target image from the two or more photographic images by image stitching, the photographic images are pre-processed such that the image stitching may be carried out and a good quality target image bay be generated. The two or more photographic images are pre-processed to correspond each other in detail for enabling high quality target image through image stitching.

The pre-processing comprises view angle correction for producing photographic images which represent front projection images of the cylindrical object.

The pre-processing also comprises unrolling or generating rectilinear, or 2-dimensional, images of the cylindrical object. This means bending the curvilinear shape of the cylindrical object in a flat rectilinear shape.

Image stitching is well known process of combining multiple photographic images with overlapping fields of view to produce a segmented panorama or high-resolution image. The image stitching is carried out utilizing a known image stitching algorithm.

In some embodiments, the electronic identification system or the user device in step b) is configured to generate view angle corrected images of cylindrical object in the two or more photographic images by distorting the two or more photographic images, the view angle corrected images representing front projection images of the cylindrical object perpendicular to the cylinder axis.

In alternative embodiments, the electronic identification system or the user device in step b) is configured to generate view angle corrected images of cylindrical object in the two or more photographic images, generating view angle corrected images of cylindrical object comprises altering the view angle by distorting the two or more photographic images, the view angle corrected images representing front projection images of the cylindrical object perpendicular to the cylinder axis.

When the photographic images are acquired the imaging device, or the sensor thereof may be slightly tilted or slanted in relation to the direction perpendicular to the rotation axis of the cylindrical object. Thus, the photographic images may not be exact front projection images of the cylindrical object, but slightly perspective images. This is due to the fact that the actual view angle via which the ray of light from the image sensor travels to the cylinder axis is not perpendicular to the cylinder axis.

One embodiment for carrying out the view angle correction is by distorting the photographic image by virtually moving the image sensor after photographic image is taken.

The view angle correction or virtual displacement of the image sensor may be calculated based on the detected border or side borders of the cylindrical object in the photographic image. The distortion of the photographic image is carried out based on the calculated view angle correction.

In an alternative embodiment, the view angle correction or virtual displacement of the image sensor may be calculated based on the detected border or side borders of the cylindrical object in the photographic image and the detected sensor center point of the photographic image. The distortion of the photographic image is carried out based on the calculated view angle correction.

In a further alternative embodiment, the view angle correction or virtual displacement of the image sensor may be calculated based on the detected border or side borders of the cylindrical object in the photographic image, the detected sensor center point of the photographic image and the calculated image taking distance. The distortion of the photographic image is carried out based on the calculated view angle correction.

The electronic identification system or the user device may be configured to generate view angle corrected images, for example by utilizing a view angle correction algorithm.

In some embodiments, the electronic identification system or the user device in step b) is configured to generate rectilinear corrected images of cylindrical object in the two or more photographic images, by distorting the two or more photographic images, the rectilinear projection images representing rectilinear projection of the cylindrical object.

In some alternative embodiments, the electronic identification system or the user device in step b) is configured to generate rectilinear corrected images of the cylindrical object in the two or more photographic images, generating rectilinear projection images of the cylindrical object comprises unrolling the cylindrical object by distorting the two or more photographic images, the rectilinear projection images representing rectilinear of the cylindrical object.

The rectilinear correction may be calculated based on the diameter of the cylindrical object. The diameter may be pre-determined or it may be determined as disclosed above. The distortion of the photographic image is carried out based on the calculated rectilinear correction.

In an alternative embodiment, the rectilinear correction may be calculated based on the detected side borders of the cylindrical object in the photographic image and the detected sensor center point of the photographic image. The distortion of the photographic image is carried out based on the calculated rectilinear correction.

The electronic identification system or the user device may be configured to generate rectilinear corrected images, for example by utilizing a rectilinear correction algorithm.

In some embodiments, the electronic identification system or the user device in step b) is configured to image stitch the two or more photographic images to generate the target image, the target image representing rectilinear projection of the cylindrical object around the cylinder axis.

In some other embodiments, the electronic identification system or the user device in step b) is configured to image stitch the two or more view angle corrected photographic images to generate the target image, the target image representing rectilinear projection of the cylindrical object around the cylinder axis.

In some alternative embodiments, the electronic identification system or the user device in step b) is configured to image stitch the two or more rectilinear corrected photographic images to generate the target image, the target image representing rectilinear projection of the cylindrical object around the cylinder axis.

In some further alternative embodiments, the electronic identification system or the user device in step b) is configured to image stitch the two or more view angle corrected and rectilinear corrected photographic images to generate the target image, the target image representing rectilinear projection of the cylindrical object around the cylinder axis.

The pre-processed photographic images enable high quality image stitching and high-quality target image. The quality of the target image is important for reliable and accurate identification output.

In some embodiments, the electronic identification system or the user device in step b) is configured to image align the two or more photographic images and compositing the two or more aligned photographic images, respectively, to form the target image.

In some alternative embodiments, the electronic identification system or the user device in step b) is configured to image align the two or more photographic images to each other and compositing two or more aligned photographic images, respectively, to form the target image, the image aligning comprising:
- matching corresponding keypoints of the two or more photographic images;
- aligning the corresponding keypoints of the two or more photographic images to each other; and
- compositing the two or more aligned photographic images, respectively, to from the target image.

In some embodiment, the electronic identification system or the user device in step b) is configured to
- detect one or more alignment keypoints in the two or more photographic images;
- match corresponding alignment keypoints of the two or more photographic images;
- align the corresponding alignment keypoints of the two or more photographic images to each other; and
- composite the two or more aligned photographic images, respectively, to form the target image.

Accordingly, the two or more photographic images are aligned, meaning virtually superposed, to each other and then the target image generated by compositing the two or more photographic images to form the target image by image stitching.

The electronic identification system or the user device in step b) is configured to utilize an image aligning algorithm and an image stitching algorithm. Alternatively, the image stitching algorithm is configured to align the two or more photographic images and the image stich them to form the target image, and thus the image aligning algorithm may be omitted.

In some embodiments, the electronic identification system or the user device in step c) is configured to
- align the target image to the reference image by distorting the target image and analysing the aligned target image in relation to the reference image ; or
- aligning the target image to the reference image by distorting the target image to match the reference image and analysing the aligned target image in relation to the reference image;
- detecting corresponding keypoints in the target image and in the reference image;
- matching corresponding alignment keypoints of the target image and the reference image;
- aligning the corresponding keypoints in the target image and in the reference image to each other by distorting the target image.

The target image is image aligned to the reference image such that the target image is modified to match the reference image. The image alignment of the target image is carried out in relation to the reference image by distorting the target image. This enables comparing or analysing the target image in relation to the reference image accurately and reliably for identifying authenticity of the object.

In the context of this application, aligning by distorting means that distortions and/or defects in the target image are compensated by aligning the target image to the reference image such that the target image corresponds the reference image as well as possible. Generally distorting means generating deviations by changing the spacial relationship between parts of the image.

In some alternative embodiments, the electronic identification system or the user device in step c) is configured to
- associate and locking a reference image grid on the reference image;
- associate and locking a target image grid on the target image; and
- align the target image to the reference image by distorting the target image grid in relation to the reference image grid for aligning the target image to the reference image.

Aligning the target image to the reference image by utilizing the target image grid and the reference image grid enables aligning the target image to the reference image in simplified manner providing efficient processing.

In some embodiments, the electronic identification system or the user device in step c) is configured to
- compare the aligned target image to the reference image by utilizing statistical methods for identifying authenticity of the object; and
- calculate an identification output value based on comparing the aligned target image to the reference image.

In some embodiments, the electronic identification system or the user device in step c) is configured to
- provide a machine learning identification algorithm or an identification neural network trained with the reference image;
- compare the aligned target image to the reference image by utilizing the machine learning identification algorithm or the identification neural network;
- calculating an identification output value based on comparing the aligned target image to the reference image.

In some embodiments, the electronic identification system or the user device in step d) is configured to generate a visual, or audio or tactile authenticity identification indication based on the identification output or identification output value. The generated authenticity identification indication may be performed in the electronic identification system or in the user device.

Statistical methods are simple and require short processing times and they may be used when high-quality target images are provided. Utilizing statistical methods is fast and efficient analysis method requiring moderate amount calculation capacity.

The machine learning identification algorithm or the identification neural network is trained with one or more reference images of the original cylindrical object to carry out the analysing. Further, the machine learning identification algorithm or the identification neural network may be trained continuously for enhancing the accuracy of the analysing.

The present invention is also based on an idea of providing a mobile user device having an imaging device, one or more device processors and at least one device memory for storing device instructions which when executed by the one or more device processors cause the mobile user device to, or the mobile user device on configured to
- a) acquire two or more photographic images of a cylindrical object from different angles around a cylinder axis with the imaging device during rotation of the cylindrical object and imaging device in relation to each other around the cylinder axis of the cylindrical object;
- b) generate a target image from the two or more photographic images by image stitching;
- c) analyse the target image in relation to a reference image representing an original cylindrical object and generating an identification output based on the analysing for identifying authenticity of the cylindrical object; and
- d) generate an authenticity identification indication based on the identification output.

Accordingly, mobile user device is configured to carry out all the steps of the method according the present invention.

Further, the at least one device memory is configured to store device instructions which when executed by the one or more device processors cause the mobile user device to carry out a method according to any embodiment disclosed above.

The present invention is further based on an idea of providing an electronic identification system comprising a mobile user device having an imaging device, one or more device processors and at least one device memory for storing device instructions and an identification server system having one or more server processors and at least one server memory storing server instructions, the device instructions and the server instructions, when executed by the one or more processors, being caused the mobile user device and the identification server system to:
- a) acquiring two or more photographic images of the cylindrical object from different angles around the cylinder axis with an imaging device;
- b) generating a target image from the two or more photographic images by image stitching;
- c) analysing the target image in relation to a reference image representing an original cylindrical object and generating an identification output based on the analysing; and
- d) generating an authenticity identification indication based on the identification output.

Accordingly, the identification server system and the mobile user device form the electronic identification system and are configured to carry out together the steps of the method according to the present invention.

The identification server system and the mobile user device form the electronic identification system and are configured to carry out a method according to any embodiment disclosed above. Accordingly, the at least one device memory and the at least one server memory are configured to store device instructions and server instructions which when executed by the one or more device processors and one or more server processors cause the electronic identification system to carry out a method according to any embodiment disclosed above.

In some embodiments, the device instructions when executed by the one or more device processors cause the mobile user device to carry out steps a) and b), and the server instructions when executed by the one or more server processors cause the identification server system to carry out steps c) and d).

The present invention provides an automated and efficient system, method and device for identifying authenticity of a cylindrical object without providing any additional markings or tags to the original objects. The present invention automatically generates one high-quality target image representing different view angles around the cylindrical object. The high-quality target image makes it possible accurately identify authenticity of a cylindrical object.

### BRIEF DESCRIPTION OF THE DRAWINGS

The invention is described in detail by means of specific embodiments with reference to the enclosed drawings, in which
Figure 1 shows a schematic side view of a cylindrical object;
Figure 2 shows schematically a label of the cylindrical object of the figure 1;
Figure 3 shows schematically a top view of the cylindrical object of the figure 1;
Figures 4 to 12 show schematically acquiring photographic images of a cylindrical object from different view angles around the cylinder axis;
Figures 13 to 16 show schematically generating a target image from the photographic images;

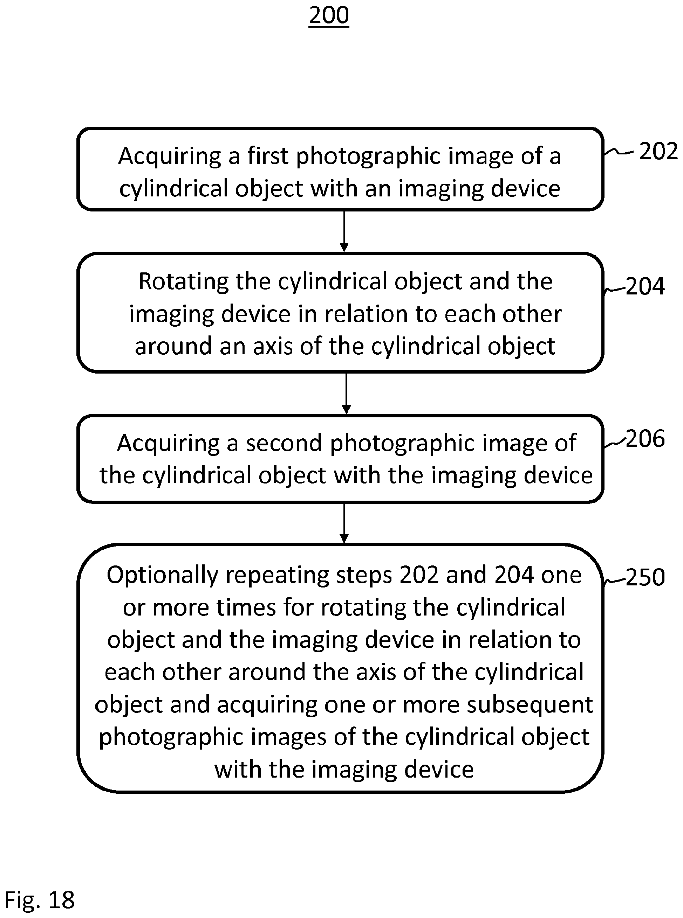

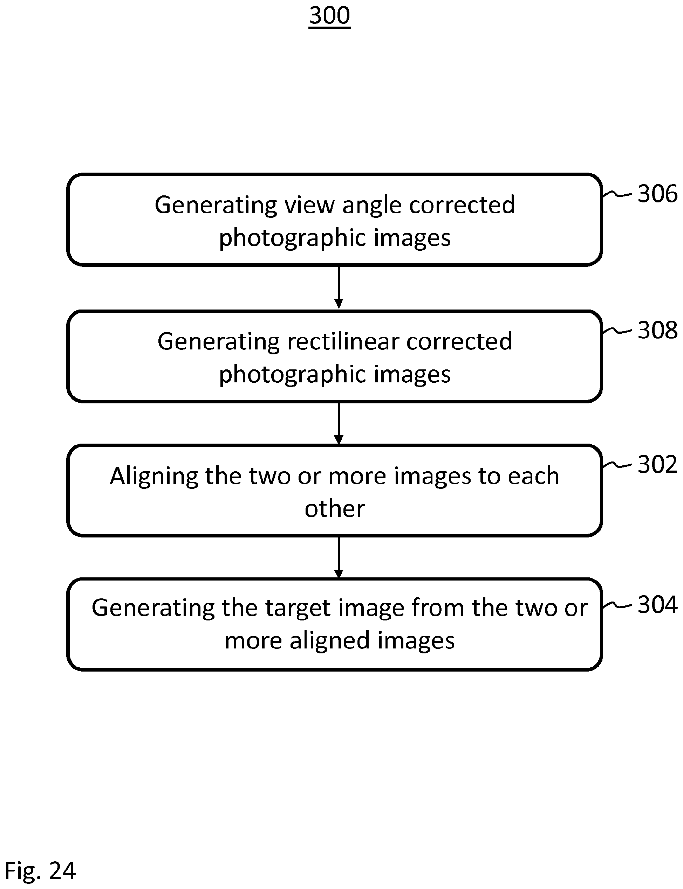

Figures 17 to 25 show flow chart disclosing the method according to the present invention;
Figured 26 to 28 show schematically an electronic identification system according to the present invention.

### DETAILED DESCRIPTION OF THE INVENTION

The present invention provides an electronic identification system having one or more processors and at least one memory storing instructions for execution by the one or more processors for carrying out the method steps of the present invention. Thus, the electronic identification system is configured to carry out the method steps. The electronic identification system may comprise one or more server devices and one or more user devices or mobile user devices. The method steps are carried out partly with the one or more server devices and partly with the one or more user devices or mobile user devices.

The present invention may also comprise a mobile user device having an imaging device, one or more device processors and at least one device memory for storing device instructions which when executed by the one or more device processors cause the mobile user device to carry out the method steps of the present invention. The method steps are carried out with the one or more user devices or mobile user devices. Thus, the user device or the mobile user device is configured to carry out the method steps.

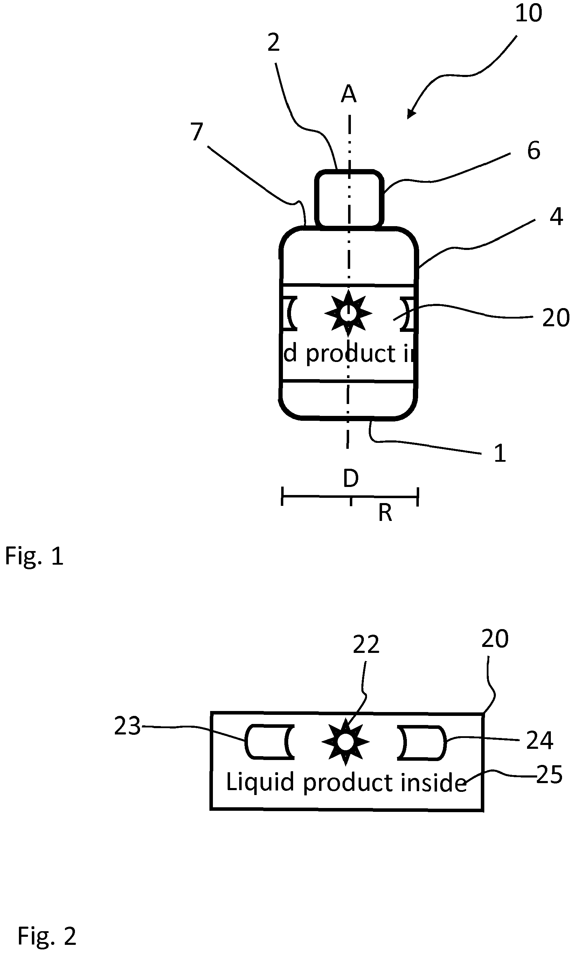

Figure 1 shows schematically a cylindrical object 10. The cylindrical object 10 comprises container portion having a bottom 1, a top surface 7 and a sheath surface 4. The cylindrical object 10 also has a cap 2 provided to the top surface 7 of the container portion. The cap 2 comprises a cap top surface and cap sheath surface 6.

The cylindrical object 10 also comprises a cylinder axis A extending in a direction between the bottom 1 and the top surface, or cap 2, of the cylindrical object 10. The cylindrical object 10 of figure 1 is a circular cylinder or an axial symmetry cylinder. The cylindrical object 10, or the container portion thereof, has a constant diameter D and constant radius R in a direction perpendicular to the cylinder axis A.

The cylindrical object 10 of figure 1 is for example a vial.

The cylindrical object 10, or the container portion thereof, is provided with a label 20. The label 20 is wrapped around the cylindrical object 20 in a direction perpendicular to the cylinder axis A. Thus, the label 20 is wrapped around the cylindrical object 20 and around the cylinder axis A. The label 20 is wrapped on the circular sheath surface 4.

Figure 2 shows the label 20 is unwrapped or unrolled state. The label 20 is a flat rectangular strip or sheet. When wrapped around the cylindrical object 10 and on the circular sheath surface 4, the label 20 is bent to conform with the circular shape of the sheath surface 4. Thus, the label takes the cylindrical shape of the cylindrical object 10 and becomes part of the cylindrical object 10.

The label 20 comprises drawings and marks 22, 23, 24 as well as characters 25. The drawings, marks and characters 22, 23, 24, 25 form features or keypoints of the label 20. The drawings, marks and characters 22, 23, 24, 25 may be any and any kind of visual elements. The visual elements forming the keypoints or features may also be surface shapes, such as protrusions or recesses, on the surface of the cylindrical object 10.

It should be noted, that in all the embodiments the label 20 or the like may be added to the cylindrical object 10 and it forms part of the cylindrical object 10. Alternatively, in all embodiments the label may be omitted, and the visual elements forming the features or keypoints may be provided directly on the cylindrical container 1.

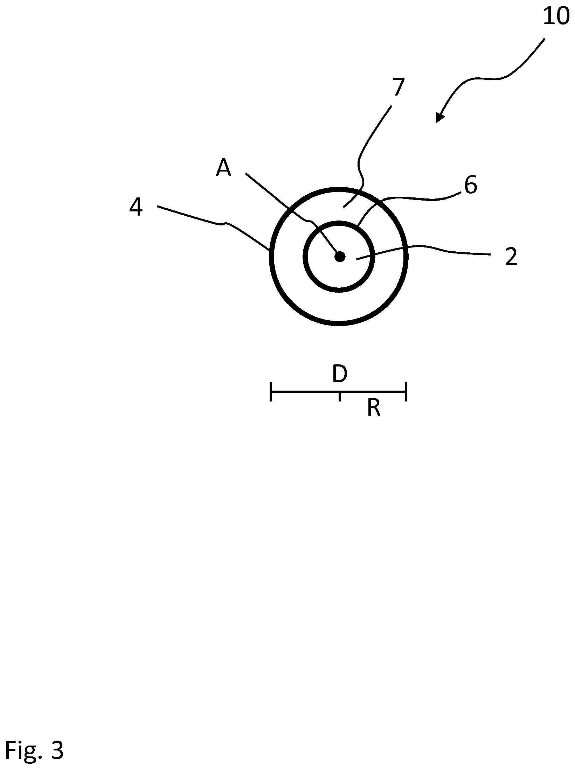

Figure 3 shows the cylindrical object 10 in a top view. The cylindrical object 10 comprises the central cylinder axis A.

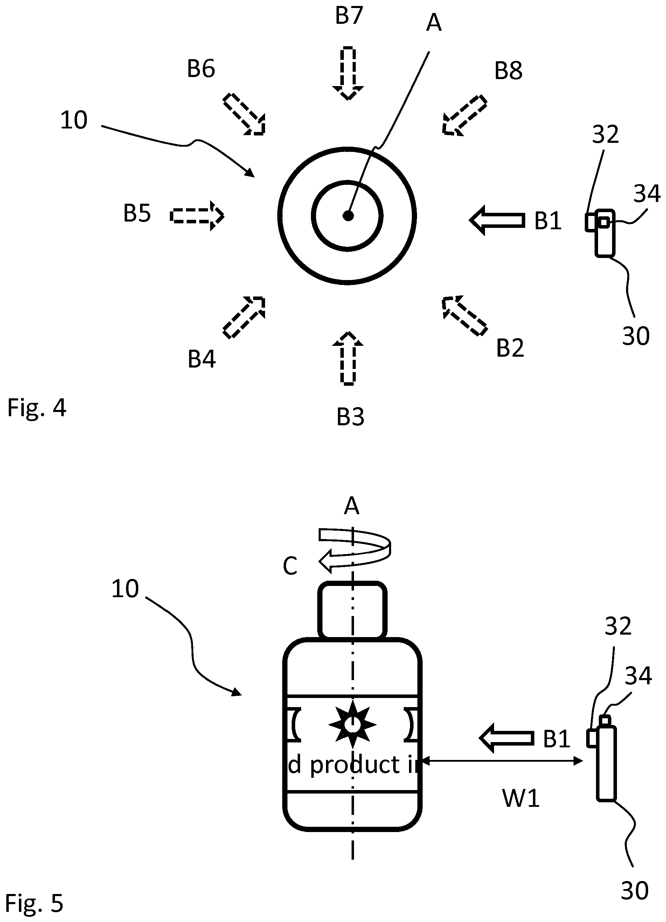

Figure 4 shows in a top view a schematic representation according to the method of the present invention for acquiring two or more photographic images of the cylindrical object 10 with an imaging device 30.

The imaging device 30 is a digital imaging device 30 configured to generate the photographic images. The photographic images are therefore digital images. Digital images are stored as digital image files. The digital imaging device 30 contains arrays of electronic photodetectors in an image sensor to produce images focused by a lens. Accordingly, the captured photographic images are digitized and stored as image files ready for further digital processing, viewing, electronic publishing, or digital printing. The image sensor is a sensor that detects and conveys information used to produce an image by converting the variable attenuation of light waves into signals, small bursts of current that convey the information for producing the image. The waves can be light or other electromagnetic radiation. The image sensor may be for example a charge-coupled device (CCD) or an active-pixel sensor (CMOS sensor). These facts concern all embodiment of the invention.

Accordingly, the imaging device 30 comprises the image sensor and the lens, marked with common reference number 32 in figure 4.

The imaging device 30 may further comprise a flashlight 34. The flashlight may be configured to emit flashlight during capturing the photographic images.

As shown in figure 4, the method comprises acquiring two or more photographic images of the cylindrical object 10 with the imaging device 30 acquiring two or more photographic images of the cylindrical object 10 from different angles B1, B2, B3, B4, B5, B6, B7, B8 around the cylinder axis A. Thus, the cylindrical object 10 is photographed from different direction in order to capture photographic images of the cylindrical object 10 around the cylinder axis A.

As shown in figure 4, a first photographic image is acquired from a first view angle or angular position B1, the first photographic image showing a first portion of the cylindrical object 10 according to the first view angle B1. Then the imaging device 30 and the cylindrical object are rotated relative to each other around the cylinder axis A. When the imaging device 30 at a second view angle B2, a second photographic image is acquired from the view angle or angular position B2, the second photographic image showing a second portion of the cylindrical object 10 according to the second view angle B2. This may be continued until a desired number of photographic images are acquired from the cylindrical object 10.

In the present invention, the relative rotation of the cylindrical object 10 and the imaging device 30 is preferably continuous rotation and the photographic images are taken automatically during the relative rotation. However, the relative rotation may also be intermittent such that the relative rotation is stopped when the photographic images are acquired.

The relative rotation of the imaging device 30 and the cylindrical object 10 around the cylinder axis A is carried out by rotating the imaging device 30 around the cylindrical object 10 and the cylinder axis A, or rotating the cylindrical object 10 around the cylinder axis A. Alternatively, the relative rotation is carried out by rotating the imaging device 30 rotated around the cylindrical object 10 and the cylinder axis A and rotating the cylindrical object 10 around the cylinder axis A in the same or opposite direction with the imaging device 30.

The two or more photographic images may be acquired between 50 to 360 degrees around the cylindrical object 10 and the cylinder axis A.

The method and system of the present invention may in some embodiments comprise an image taking apparatus (not shown) for acquiring the two or more photographic images of the cylindrical object with the imaging device 30. The image taking apparatus is arranged to receive the cylindrical object 10 and the imaging device 30 and support them in the image taking apparatus. The Image taking apparatus is further configured to automatically rotate the cylindrical object 10 and the imaging device 30 relative to each other around the cylinder axis A in any above described manner with a rotation mechanism.

Alternatively, the user may rotate the cylindrical object on flat surface, such as tabletop surface. It is also possible that the user rotates the cylindrical object in hand.

Figure 5 shows a schematic side view according to the method present invention and figure 4. The cylindrical object 10 and the imaging device 30 are rotated relative to each other around cylinder axis A in a rotation direction C.

The first photographic image is acquired in the first view angle B1 with the imaging device 30.

The imaging device 30 is configured to calculate an image taking distance W1 between the imaging device 30 and the cylindrical object 10 when the first photographic image is acquired.

The image taking distance value W1 is specifically distance between the cylindrical object 10 and the image sensor 32. The image taking distance value W1 measurement is commonly known using one or more separate image sensors in the imaging device 30. The image taking distance value W1 is calculated or measured using the image sensor(s) 32 and instructions stored in a memory of the imaging device 30 and executed by a processor of the imagining device 30.

In the present invention, the electronic identification system or imaging device 30 is configured to store the image taking distance value W1 as metadata to the acquired photographic image. The image taking distance calculation may also be omitted.

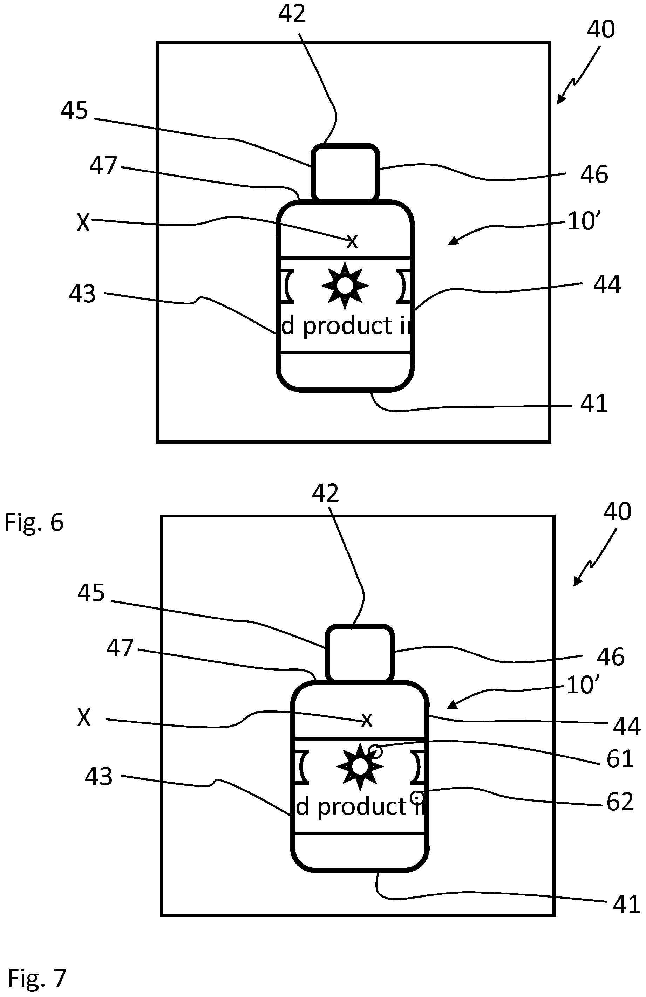

Figure 6 shows schematically a first photographic image 40 acquired from the first view angle B1 with the imaging device 30. The first photographic image 40 comprises a first cylindrical object image 10' of the cylindrical object 10. The first cylindrical object image 10' comprise container portion having a bottom border 41, a top border 47 and opposite side borders 43, 44. The first cylindrical object image 10' also has a cap 2 provided to the top border 47 of the container portion. The cap 2 comprises a cap top border and cap sheath borders 45, 46.

Accordingly, in the present invention the first cylindrical object image 10' is digital representations of the cylindrical object 10 in the first photographic image 40.

The imaging device 30, and the image sensor 32 thereof, is configured to determine a sensor center point X in the first photographic image 40. This is commonly known determination.

In the present invention, the imaging device 30 or the instructions stored therein is configured to store the sensor center point X in the first photographic image 40 as metadata to the acquired first photographic image 40 and image file thereof.

The sensor center point X determination may also be omitted.

The electronic identification system or the user device 30 is configured to detect keypoints or features in the first photographic image 40 and especially keypoints or features in the first cylindrical object image 10' in the first photographic image 40.

The electronic identification system or the user device 30 comprises keypoint detection or feature detection algorithm configured to detect keypoints or features in the photographic images and especially keypoints or features in the cylindrical object images in the photographic images. Keypoint or feature detection algorithms are configured to detect and describe local features in images. The keypoint or feature detection algorithms are commonly known, and their description will be omitted. The keypoint or feature detection algorithm may be for example scale variant feature transform (SIFT) algorithm, speed up robust feature (SURF) algorithm, robust independent elementary features (BRIEF) algorithm, or oriented FAST algorithm or rotated BRIEF (ORB) algorithm.

As shown in figure 6, the electronic identification system or the user device 30 is configured to detect one or more first keypoints 61, 62 in the first photographic image 40 and in the first cylindrical object image 10' thereof.

The first keypoints 61, 62 are detected by utilizing the keypoints detection algorithm.

The electronic identification system or the user device 30 is also configured to detect the borders 42, 45, 46, 47, 43, 44, 41 of the vial or the cylindrical object 10 or the first cylindrical object image 10' in the first photographic image 40.

The electronic identification system or the user device 30 is especially configured to detect the side borders 43, 44 of the vial or the cylindrical object 10 or the first cylindrical object image 10' in the first photographic image 40.

The electronic identification system or the imaging device 30 is configured to store the detected first keypoints 61, 62 and the detected borders 42, 45, 46, 47, 43, 44, 41, or the side borders 43, 44, in the first photographic image 40 as metadata to the acquired first photographic image 40 and image file thereof.

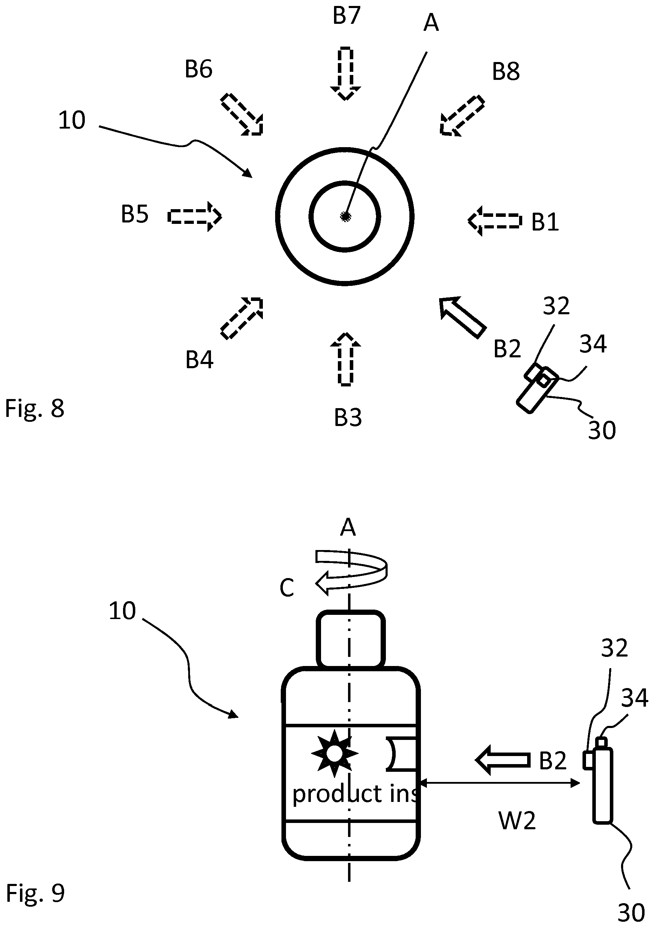

Figures 8 and 9 show schematically when the imaging device 30 and the cylindrical object 10 are rotated relative to each other around the cylinder axis A in the rotation direction C such that the imaging device 30 is in the second view angle B2.

As shown in figure 9, the imaging device 30 or the image sensor 32 thereof is configured to acquire the second photographic image.

The imaging device 30 is configured to calculate an image taking distance W2 between the imaging device 30 and the cylindrical object 10 when the second photographic image is acquired. The electronic identification system or the imaging device 30 is configured to store the second image taking distance value W2 as metadata to the second acquired photographic image. The image taking distance calculation may also be omitted.

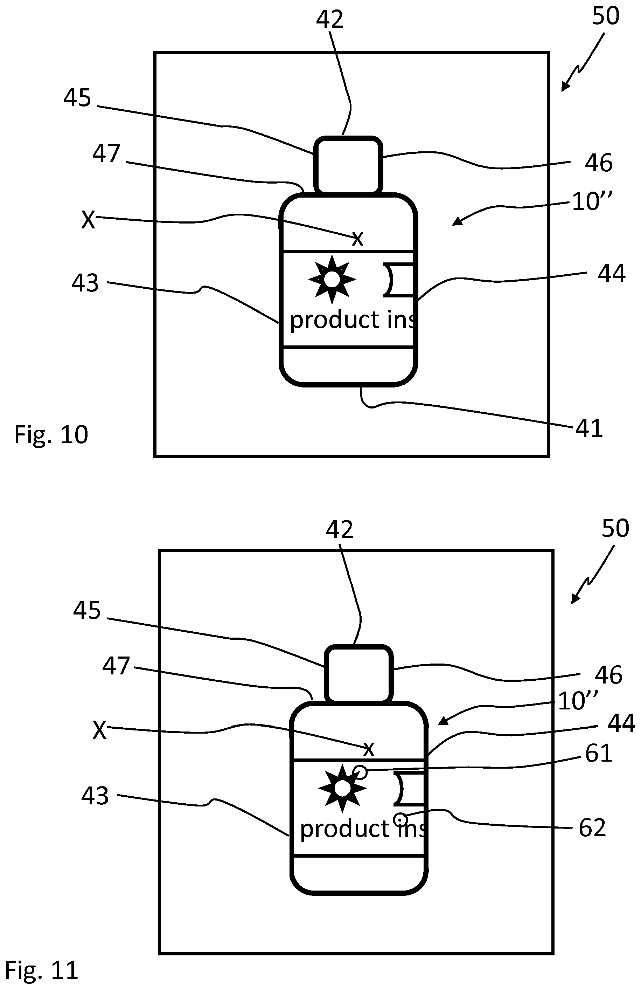

The second photographic image 50 is shown in figure 10. The second photographic image 50 is acquired from the second view angle B2 such that it comprises second cylindrical object image 10" representing the cylindrical object 10 from the direction of the second view angle B2.

The imaging device 30, and the image sensor 32 thereof, is configured to determine the sensor center point X in the second photographic image 50.

The electronic identification system of the imaging device 30 is configured to store the sensor center point X in the second photographic image 50 as metadata to the acquired second photographic image 50 or to the image file thereof.

The sensor center point X determination may also be omitted.

As shown in figure 11, the electronic identification system or the user device 30 is configured to detect the one or more first keypoints 61, 62 in the second photographic image 50 and in the second cylindrical object image 10" thereof.

As shown in figure 11, the electronic identification system or the user device 30 is configured to detect the one or more first keypoints 61, 62 in the second photographic image 50 and in the second cylindrical object image 10" thereof.

The first keypoints 61, 62 are detected by utilizing the keypoints detection algorithm.

The electronic identification system or the user device 30 is also configured to detect the borders 42, 45, 46, 47, 43, 44, 41 of the vial or the cylindrical object 10 or the second cylindrical object image 10" in the second photographic image 50.

The electronic identification system or the user device 30 is especially configured to detect the side borders 43, 44 of the vial or the cylindrical object 10 or the second cylindrical object image 10' in the second photographic image 50.

The electronic identification system or the imaging device 30 is configured to store the detected first keypoints 61, 62 and the detected borders 42, 45, 46, 47, 43, 44, 41, or the side borders 43, 44, in the second photographic image 50 as metadata to the acquired second photographic image 50 and image file thereof.

The electronic identification system or the imaging device 30 is configured to store the detected first keypoints 61, 62 and the detected borders 42, 45, 46, 47, 43, 44, 41, or the side borders 43, 44, in the second photographic image 50 as metadata to the acquired second photographic image 50 and image file thereof.

The electronic identification system or the imaging device 30 is configured to store the detected first keypoints 61, 62 and the detected borders 42, 45, 46, 47, 43, 44, 41, or the side borders 43, 44, in the second photographic image 50 as metadata to the acquired second photographic image 50 and image file thereof.

The electronic identification system or the user device 30 may also be configured to detect the one or more second or subsequent keypoints in the second photographic image 50 and in the second cylindrical object image 10" thereof. The second or subsequent keypoints may be in the second cylindrical object image 10" taken from the second view angle B2, but not in the first cylindrical object image 10' taken from the first view angle B1.

The electronic identification system or the imaging device 30 is configured to store the detected second keypoints in the second photographic image 50 as metadata to the acquired second photographic image 50 and image file thereof.

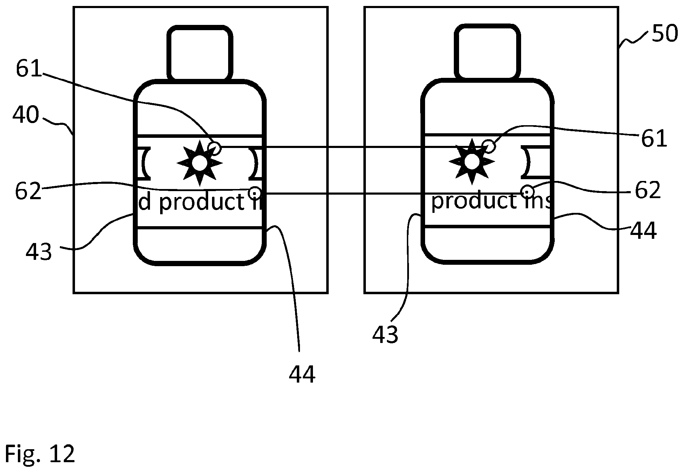

Figure 12 shows the first and second photographic images 40, 50 and the first keypoints 61, 62 respectively in the first and second photographic images 40, 50.

During the relative rotation of the cylindrical object 10 and the imaging device 30, the electronic identification system is configured to tracking the one or more first detected keypoints 61, 62 and calculating displacement of the one or more detected keypoints 61, 62 due to the relative rotation during the tracking. The tracking is carried out by detecting the first keypoints 61, 62 during the relative rotation with the keypoints detection algorithm and the imaging device 30.

The image sensor 32 of the imaging device 30 is preferably continuously active or is streaming image data such that the keypoints detection is carried out continuously, preferably for every image frame.

When a pre-determined displacement of the one or more detected keypoints 61, 62 is calculated a new or second photographic image of the cylindrical object is acquired with the imaging device 30.

Then, the method may be continued further one or more times by identifying subsequent keypoints, by tracking the subsequent detected keypoints, by calculating the displacement the subsequent keypoints during the relative rotation, and by acquiring a new photographic image of the cylindrical object is acquired with the imaging device 30 when the pre-determined displacement of the one or more detected keypoints 61, 62 is calculated.

In one embodiment, the tracking of the one or more detected keypoints 61, 62 during the relative rotation of the cylindrical object 10 and the imaging device 30 is carried out in relation to each other around the cylinder axis of the cylindrical object. The displacement of the one or more detected keypoints 61, 62 due to the relative rotation during the tracking and the calculation is based on the displacement of the detected keypoints relative to each other during the relative rotation. Thus, the calculation is carried out by comparing the relative positions of the keypoints 61, 62 to each other during the tracking and the relative rotation.

In an alternative embodiment, the tracking of the one or more first detected keypoints 61, 62 during the relative rotation of the cylindrical object 10 and the imaging device 30 is carried out in relation to the detected side borders 43, 44, or any detected border, of the cylindrical object image 10', 10". The displacement of the one or more detected keypoints 61, 62 due to the relative rotation during the tracking and the calculation is based on the displacement of the detected keypoints relative to the detected side borders 43, 44, or any detected border, during the relative rotation. Thus, the calculation is carried out by comparing the positions of the keypoints 61, 62 to positions of the detected side borders 43, 44, or any other detected border, during the tracking and the relative rotation.

The detected keypoints may be any visual elements.

In an alternative embodiment, the tracking of the one or more first detected keypoints 61, 62 during the relative rotation of the cylindrical object 10 and the imaging device 30 is carried out in relation to the detected side borders 43, 44, or any detected border, of the cylindrical object image 10', 10". The displacement of the one or more detected keypoints 61, 62 due to the relative rotation during the tracking and the calculation is based on the displacement of the detected keypoints relative to the detected side borders 43, 44, or any detected border, during the relative rotation. Thus, the calculation is carried out by comparing the positions of the keypoints 61, 62 to positions of the detected side borders 43, 44, or any other detected border, during the tracking and the relative rotation.

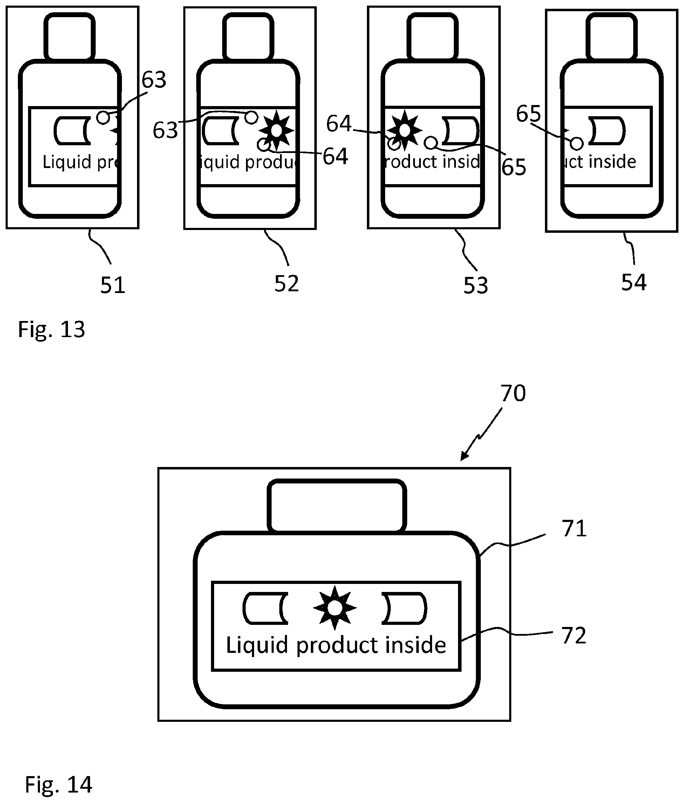

Figure 13 shows four photographic images 51, 52, 53, 54 acquired according to the present invention from different view angles in relation to the cylindrical object 10 and the cylinder axis A thereof with the imaging device.

These photographic images 51, 52, 53, 54 are image stitched together to generate the target image 70, shown in figure 14. The target image 70 representing 2-dimensional image of the cylindrical object 10 around cylinder axis A. The 2-dimensional image may be considered as unrolled image of the cylindrical object 10 or at least part of it around the cylinder axis A or as a panorama image of the cylindrical object 10 or at least part of it around the cylinder axis A.

As disclosed above, each of the photographic images 51, 52, 53, 54 is first subjected to view angle correction generating font projection image of the cylindrical object in the photographic images. Then each of the photographic images 51, 52, 53, 54 is subjected to rectilinear correction generating rectilinear image of the cylindrical object in the photographic images. Accordingly, each of the photographic images 51, 52, 53, 54 distorted to generate a front view 2-dimensional image of the cylindrical object in the photographic images 51, 52, 53, 54. Thus, the photographic images are pre-processed for high-quality and accurate generation of the target image by photo stitching.

As shown in figure 14, the target image 70 comprises the 2-dimensional image 71 of the cylindrical object and a 2-dimensional image of the label 72.

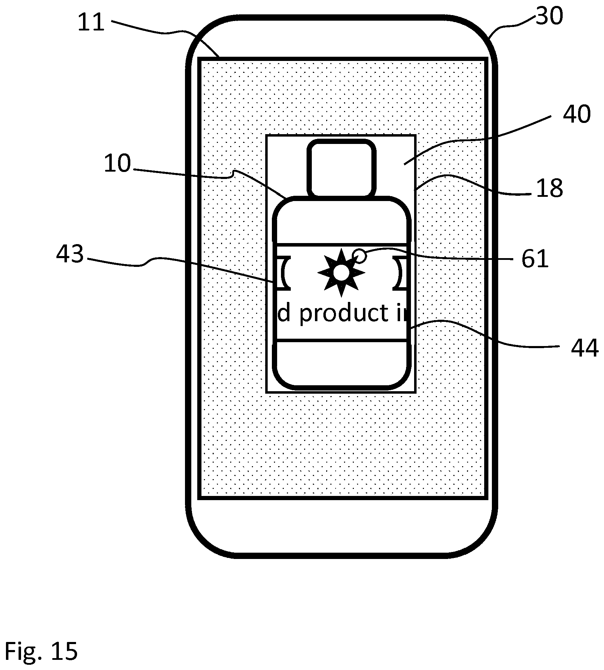

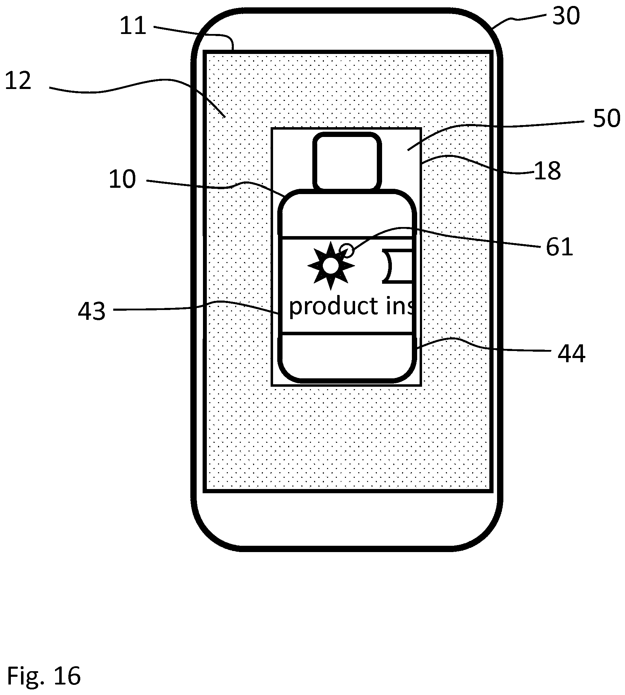

Figures 15 and 16 show schematically a user interface 12 of the user device or imaging device 30 for acquiring the photographic images. The imaging device comprises a display 11 and the display 11 is configured to provide an image taking window 18. The acquired photographic image corresponds the view in the image taking window 18.

In figure 15 the image taking window 18 is viewing the first photographic image 40 having the first keypoint in the first location. Figure 16 shows the image taking window 18 view with the second photographic image 50 when the view angle is changed and the first keypoint 61 displaced due to the relative rotation of the imaging device 30 and the cylindrical object 10. Figures 15 and 16 show the displacement of the first keypoint 61 due to the relative rotation.

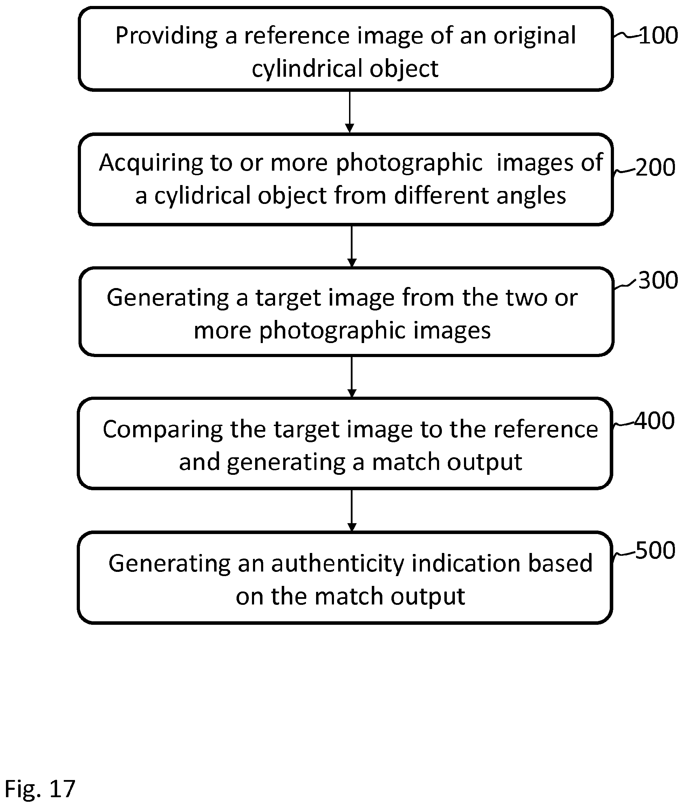

Figure 17 shows a flow chart showing the method steps of the present invention. The method comprises a step 100 of acquiring two or more photographic images 40, 50, 51, 52, 53, 54 of the cylindrical object 10 from different angles around the cylinder axis A with the imaging device 30. The method further comprises the step 200 of generating a target image 70 from the two or more photographic images 40, 50, 51, 52, 53, 54 by image stitching. The method further comprises step 300 of analysing the target image 70 in relation to a reference image 90 representing an original cylindrical object and generating an identification output based on the analysing. The method also comprises step 400 of analysing or comparing the target image 70 in relation to the reference image and generating a match output or identification output based on the analysis or the comparison. The method further comprises the step 500 of generating an authenticity identification indication based on the identification output.

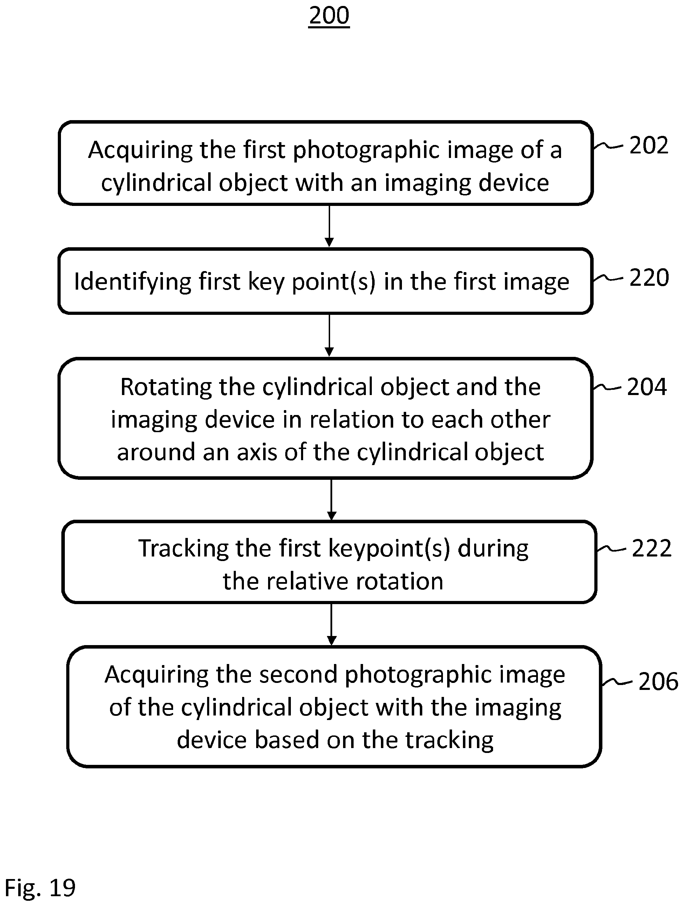

Figure 19 shows one embodiment of step 200 for acquiring the two or more photographic images automatically. The step 200 comprises steps 202 of acquiring a first photographic image 40 of the cylindrical object 10 from the direction transversal to the cylinder axis A with the imaging device 30 and step 220 of detecting or identifying one or more first keypoints 61, 62 in the first photographic image 40. The step 200 further comprises a step 204 of rotating the imaging device 30 and the cylindrical object 10 relative to each other around the cylinder axis A and a step 222 of tracking the one or more first detected keypoints 61, 62 during the relative rotation of the cylindrical object 10 and the imaging device 30 around the cylinder axis A of the cylindrical object 10. The method further comprises a step of 206 acquiring a second photographic image 50 based on the tracking.

The step 206 may also comprise calculating displacement of the first one or more detected keypoints 61, 62 due to the relative rotation during the tracking, and acquiring the photographic image 50 of the cylindrical object 10 from the direction transversal to the cylinder axis A with the imaging device 30 when the calculated displacement corresponds a pre-determined displacement value.

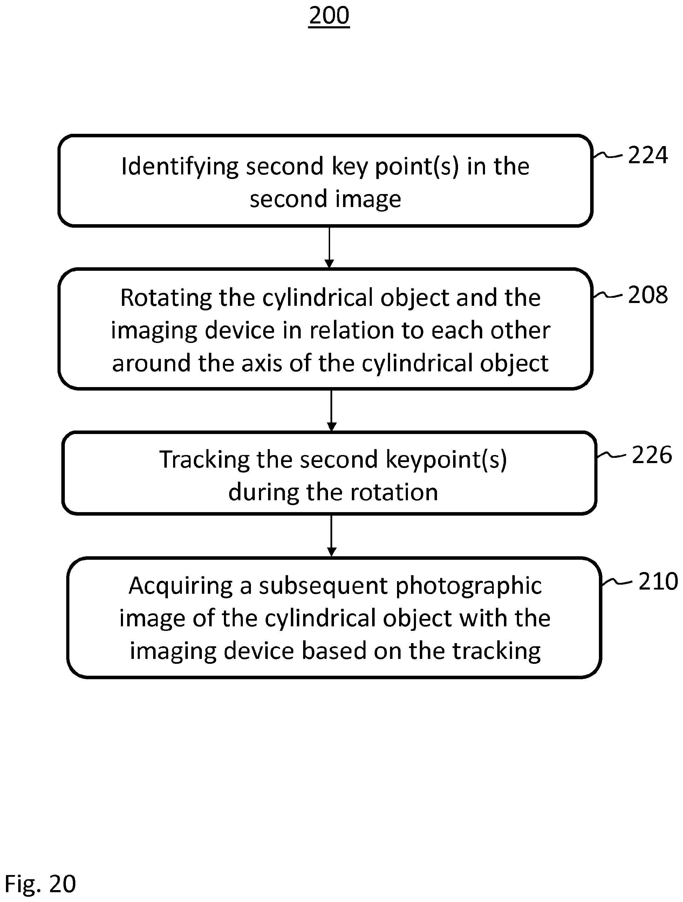

The step 200 method may be further continued when more than two photographic images are acquired, as shown in figure 20. The step 200 comprises a step 224 of detecting or identifying one or more second keypoints in the second photographic image 50. The step 200 further comprises a step 208 of rotating the imaging device 30 and the cylindrical object 10 relative to each other around the cylinder axis A and a step 226 of tracking the one or more detected second keypoints during the relative rotation of the cylindrical object 10 and the imaging device 30 around the cylinder axis A of the cylindrical object 10. The method further comprises a step of 210 acquiring a subsequent photographic image based on the tracking.

The steps 224, 208, 226 and 210 may be repeated one or more time for acquiring one or more subsequent photographic images.

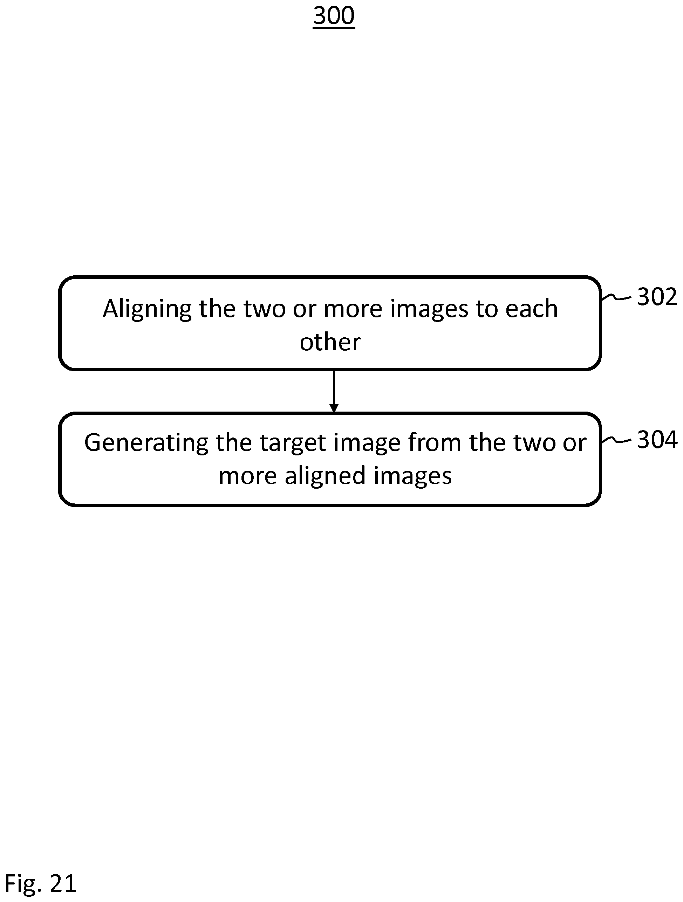

Figure 21 shows one embodiment of step 300. The step 300 comprises a step 302 of aligning the two or more acquired photographic images to each other, and a step 304 of generating the target image from the two or more aligned photographic images by mage stitching. The aligning and the image stitching may be carried out as disclosed above.

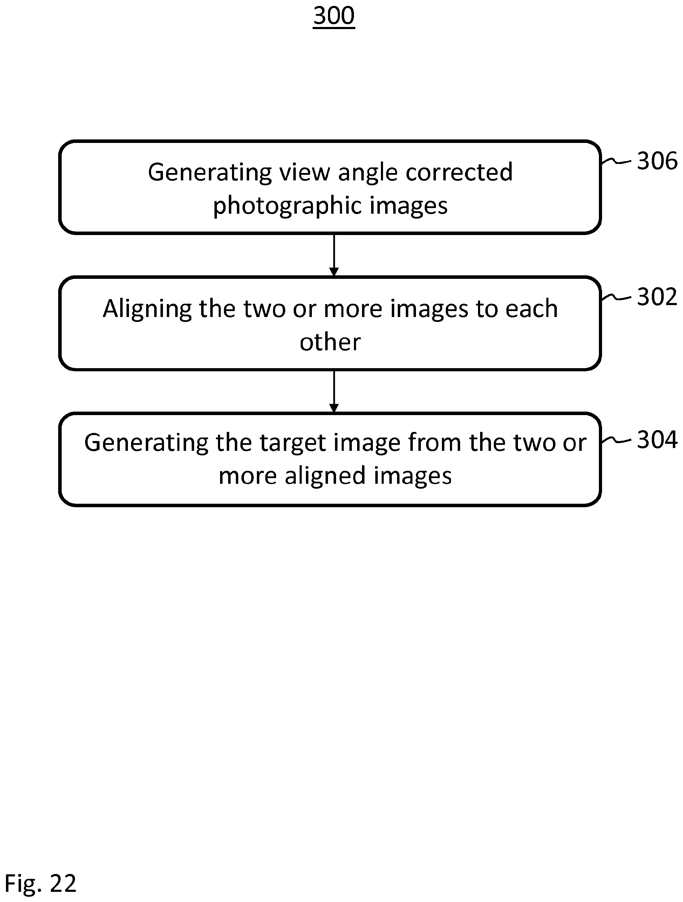

Figure 22 shows an alternative embodiment of the step 300. The step 300 comprises a step 306 generating view angle corrected photographic images. The step 306 may be carried out as disclosed above. The method further comprises the step 302 of aligning the two or more acquired photographic images to each other, and the step 304 of generating the target image from the two or more aligned photographic images by image stitching. The aligning and the image stitching may be carried out as disclosed above. The step 306 is carried out prior to the steps 302 and 304.

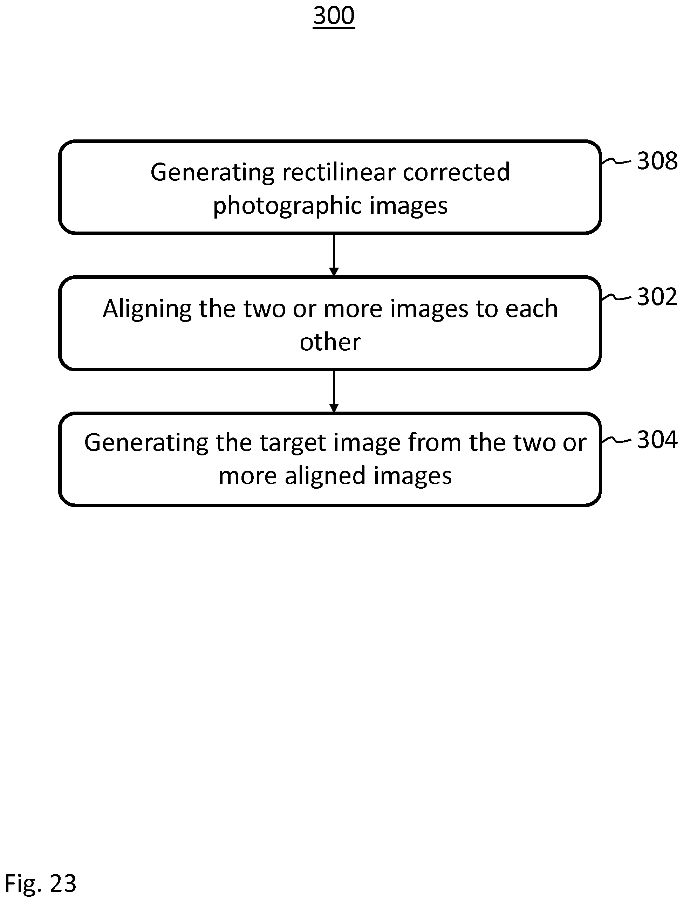

Figure 23 shows an alternative embodiment of step 300. The step 300 comprises a step 308 generating rectilinear corrected photographic images. The step 308 may be carried out as disclosed above. The method further comprises the step 302 of aligning the two or more acquired photographic images to each other, and the step 304 of generating the target image from the two or more aligned photographic images by image stitching. The aligning and the image stitching may be carried out as disclosed above. The step 308 is carried out prior to the steps 302 and 304.

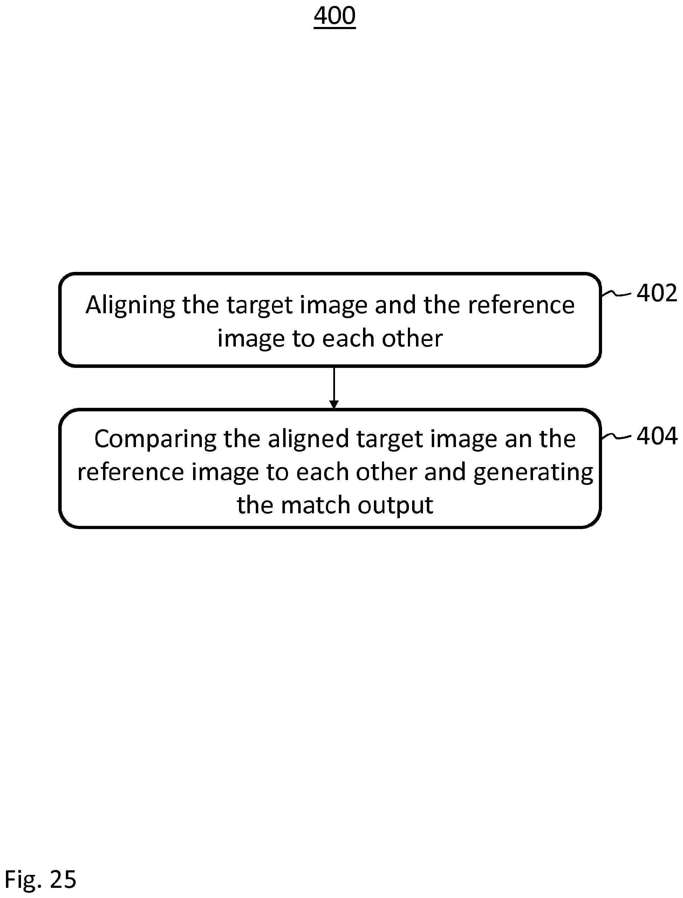

Figure 25 shows an alternative embodiment of step 300. The step 300 comprises the step 306 generating view angle corrected photographic images and the step 308 generating rectilinear corrected photographic images. The steps 306 and 308 may be carried out as disclosed above. The method further comprises the step 302 of aligning the two or more acquired photographic images to each other, and the step 304 of generating the target image from the two or more aligned photographic images by image stitching. The aligning and the image stitching may be carried out as disclosed above. The step 306 is carried out prior to the step 308 and the step 308 is carried out prior to the steps 302 and 304.

Figure 25 shows one embodiment of step 400. The step 400 comprises a step 402 of aligning the target image to the reference image. The step 400 further comprises analysing or comparing the aligned target image 70 and the reference image to each other, and generating the match or identification output.

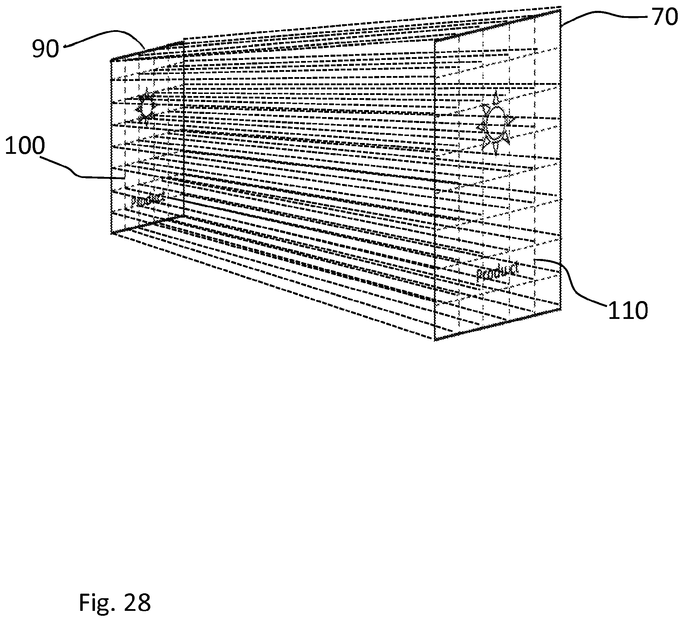

Figure 28 shows one embodiment of the step 400. The step 400 comprises the step 402 in which a reference image grid 100 is associated and locked on the reference image 90, and a target image grid 110 is associated and locked on the target image 70. The step 403 further comprises aligning the target image 70 to the reference image 90 by distorting the target image grid 110 in relation to the reference image grid 100 for aligning the target image 70 to the reference image 90. Thus, the target image is distorted together with distorting the target image grid.

The invention and its embodiments are not specific to the particular electronic identification systems, communications systems and access networks, but it will be appreciated that the present invention and its embodiments have application in many system types and may, for example, be applied in a circuit switched domain, e.g., in GSM (Global System for Mobile Communications) digital cellular communication system, in a packet switched domain, e.g. in the UMTS (Universal Mobile Telecommunications System) system, the LTE (Long Term Evolution), or 5G NR (New Radio) standards standardized by the 3GPP (3G Partnership Project), and e.g. in networks according to the IEEE 802.11 standards: WLAN (Wireless Local Area networks), HomeRF (Radio Frequency) or BRAN (Broadband Radio Access Networks) specifications (HIPERLAN1 and 2, HIPERACCESS). The invention and its embodiments can also be applied in ad hoc communications systems, such as an IrDA (Infrared Data Association) network or a Bluetooth network. In other words, the basic principles of the invention can be employed in combination with, between and/or within any mobile communications systems of 2nd, 2,5th, 3rd, 4th and 5th (and beyond) generation, such as GSM, GPRS (General Packet Radio Service), TETRA (Terrestrial Trunked Radio), UMTS systems, HSPA (High Speed Packet Access) systems e.g. in WCDMA (Wideband Code Division Multiple Access) technology, and PLMN (Public Land Mobile Network) systems.

Communications technology using IP (Internet Protocol) protocol can be, e.g., the GAN technology (General Access Network), UMA (Unlicensed Mobile Access) technology, the VoIP (Voice over Internet Protocol) technology, peer-to-peer networks technology, ad hoc networks technology and other IP protocol technology. Different IP protocol versions or combinations thereof can be used.

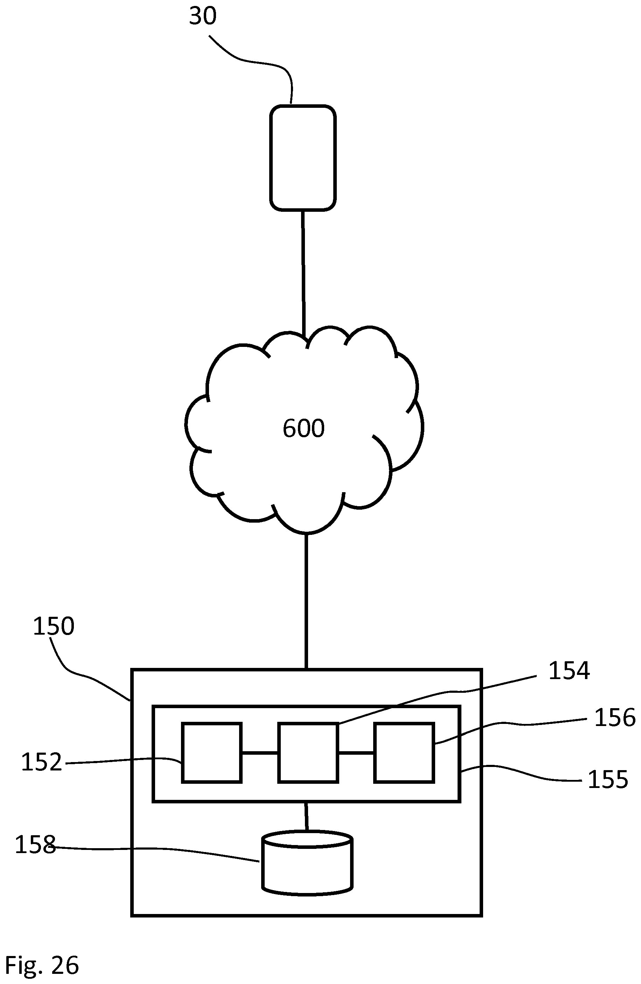

An architecture of a communications system to which embodiments of the invention may be applied as is illustrated in figure 26. Figure 26 illustrates a simplified system architecture only showing some elements and functional entities, all being logical units whose implementation may differ from what is shown. The connections shown in the figures are logical connections, the actual physical connections may be different. It is apparent to a person skilled in the art that the systems also comprise other functions and structures.

According to the above mentioned, the present invention is not limited any known or future systems or device or service, but may be utilized in any systems by following method according to the present invention.

Figure 26 illustrates an identification system in which a user may connect to an identification server system 150 by using a user device 30 via a communications network 600. It should be noted that figure 26 presents a simplified version of the identification system and that in other embodiments, an unlimited number of users may be able to connect to the identification server system 150 via the communications network 600.

The communications network 600 may comprise one or more wireless networks, wherein a wireless network may be based on any mobile system, such as GSM, GPRS, LTE, 4G, 5G and beyond, and a wireless local area network, such as Wi-Fi. Furthermore, the communications network 600 may comprise one or more fixed networks or the Internet.

The identification server system 150 may comprise at least one identification server connected to an identification database 158. The identification server system 150 may also comprise one or more other network devices (not shown), such as a terminal device, a server and/or a database devices. The identification server system 150 is configured to communicate with the one or more user devices 30 via the communications network 600. The identification server system 150 or server and the identification database 158 may form a single database server, that is, a combination of a data storage (database) and a data management system, as in figure 26, or they may be separate entities. The data storage may be any kind of conventional or future data repository, including distributed and/or centralised storing of data, a cloud-based storage in a cloud environment (i.e., a computing cloud), managed by any suitable data management system. The detailed implementation of the data storage is irrelevant to the invention, and therefore not described in detail. In addition to or instead of the identification database 158, other parts of the identification server system 150 may also be implemented as distributed server system comprising two or more separate servers or as a computing cloud comprising one or more cloud servers. In some embodiments, the identification server system 150 may be a fully cloud-based server system. Further, it should be appreciated that the location of the identification server system 150 is irrelevant to the invention. The identification server system 150 may be operated and maintained using one or more other network devices in the system or using a terminal device (not shown) via the communications network 600. The identification server system 150 may also comprise one or more user devices.

In some embodiments, the identification server system 150 is integral to the user device 30 and provided as internal server system to the user device 30. Further, in these embodiments, the communications network 600 is implemented as internal communication network or components in the user device 30, such as a wireless or wire communication network or connection in the user device.

The identification server system 150 may also comprise a processing module 152. The processing module 152 is coupled to or otherwise has access to a memory module 154. The processing module 152 and the memory module 154 may form the identification server, or at least part of it. The identification server, or the processing module 152 and/or the memory module 154, has access to the identification database 158. The processing module 152 may be configured to carry out instructions of an identification applications or units by utilizing instructions of the identification application. The identification server system 150 may comprise an identification unit 156 which may be the identification application. The identification application 156 may be stored in the memory module 154 of the identification server system 150. The identification application or unit 156 may comprise the instructions of operating the identification application. Thus, the processing module 152 may be configured to carry out the instructions of the identification application.

The processing module 152 may comprise one or more processing units or central processing units (CPU) or the like computing units. The present invention is not restricted to any kind of processing unit or any number of processing units. The memory module 154 may comprise non-transitory computer-readable storage medium or a computer-readable storage device. In some embodiments, the memory module 154 may comprise a temporary memory, meaning that a primary purpose of memory module 154 may not be long-term storage. The memory module 154 may also refer to a volatile memory, meaning that memory module 154 does not maintain stored contents when the memory module 154 is not receiving power. Examples of volatile memories include random access memories (RAM), dynamic random access memories (DRAM), static random access memories (SRAM), and other forms of volatile memories known in the art. In some examples, the memory module 154 is used to store program instructions for execution by the processing module 152, for example the identification application. The memory module 154, in one embodiment, may be used by software (e.g., an operating system) or applications, such as a software, firmware, or middleware. The memory module 154 may comprise for example operating system or software application, the identification application, comprising at least part of the instructions for executing the method of the present invention. Accordingly, the identification unit 156 of the identification server system 150 comprises the identification application and it may be a separate application unit, as shown in figure 26, or alternatively it may a separate application unit.

The processing module 152, the memory module 154 and the identification unit 156 together form an identification module 155 in the identification server system 150.

It should be noted, that the identification database 158 may also be configured to comprise software application, the identification application, comprising at least part of the instructions for executing the method of the present invention.

The identification database 158 may maintain information of one or more original objects and one or more reference images of one or more original objects. The identification database 158 may also maintain information of one or more user accounts of a plurality of users and/or information uploaded to the server system 150 via said user accounts or user devices 30. The identification database 158 may comprise one or more storage devices. The storage devices may also include one or more transitory or non-transitory computer-readable storage media and/or computer-readable storage devices. In some embodiments, storage devices may be configured to store greater amounts of information than memory module 154. Storage devices may further be configured for long-term storage of information. In some examples, the storage devices comprise non-volatile storage elements. Examples of such non-volatile storage elements include magnetic hard discs, optical discs, solid-state discs, flash memories, forms of electrically programmable memories (EPROMs) or electrically erasable and programmable memories (EEPROMs), and other forms of non-volatile memories known in the art. In one embodiment, the storage device may comprise databases and the memory module 154 comprise instructions and operating identification application for executing the method according to the present invention utilizing the processing unit 152. However, it should be noted that the storage devices may also be omitted and the identification server system 150 may comprise only the memory module 154, which also is configured as maintain the identification database 158. Alternatively, the memory module 154 could be omitted and the identification server system 150 could comprise only one or more storage devices. Therefore, the terms memory module 154 and identification database 158 could be interchangeable in embodiments which they both are not present. The identification database 158 is operable with other components and data of the identification server system 150 by utilizing instructions stored in the memory module 154 and executed by the processing unit 152 over the communications network 600.

The identification database 158 may be provided in connection with the identification server or the identification server may comprise the identification database 158, as shown in figure 26. Alternatively, the identification database 158 may be provided as an external database 158, external to the identification server 150, and the identification database 158 may be accessible to and connected to the identification server directly or via the communications network 600.

The storage device(s) may store one or more identification databases 158 for maintaining identification information or object information or reference image information. These different information items may be stored to different database blocks in the identification database 158, or alternatively they may group differently, for example based on each individual object or reference image.

Users may utilize the method and system of the present invention by a user device 30 as shown in figure 26. The user device 30 may be configured to connect with or access the identification server system 150 via the communications network 600. The user device 30 may be a personal computer, desktop computer, laptop or user terminal, as well as a mobile communication device, such as mobile phone or a tablet computer suitable for performing web browsing or capable of accessing and interacting with the identification server system 150. However, the user device 30 may also be personal digital assistant, thin client, electronic notebook or any other such device having a display and interface and being suitable for performing web browsing or capable of accessing and interacting with the identification server system 150.

Further, the user device 30 may refer to any portable or non-portable computing device. Computing devices which may be employed include wireless mobile communication devices operating with or without a subscriber identification module (SIM) in hardware or in software.

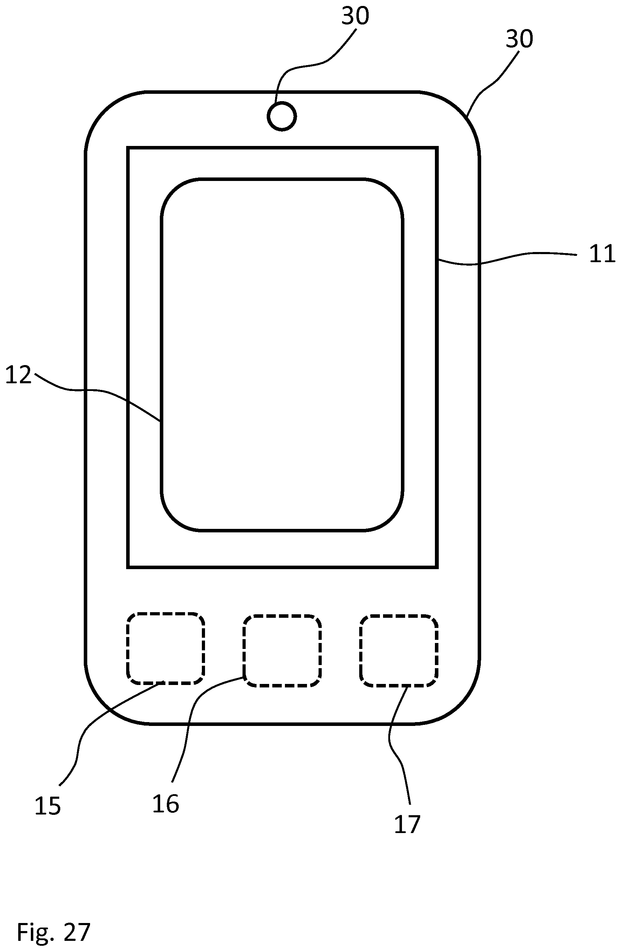

As shown in figure 27, the user device 30 comprises a user interface 12. The user interface 12 may be any suitable user interface for a human user for utilizing and interacting the identification server system 150 and the identification module 155 for carrying out or interacting with the identification server system 150 and the method of the present invention. The user interface 12 may be a graphical user interface (GUI) provided by a web browser or a dedicated application on a display 11 (e.g., a monitor screen, LCD display, etc.) of the user device 30 in connection with information provided by the identification server system 150 or other systems or servers. The user interface 12 may, for example, enable the users input messages or data, upload and/or download data files and input images and information, provide requests for an identification procedure of an object.

The user interface 12 may be accessible by the user with an input device (not shown) such as touchscreen, keyboard, mouse, touchpad, keypad, trackball or any other suitable hand operated input device or some other kind of input device such as voice operable user device or human gesture, such as hand or eye, gesture detecting input device. The input device may be configured to receive input from the user. The user interfaces (generally API, Application Programmable Interface) may be provided in connection with the system and method of the present invention in order to enable the users to interact with the identification server system 150.

The user interface 12 may also be an interface towards and accessible to an imaging device or camera 32 of the user device 30. Thus, the identification server system 150 may be accessible to the camera 32 of the user device 30 and arranged to receive one or more images obtained with the camera 32 of the user device 30.

The user devices 30 may in some embodiments comprise a user application 17 such as a software application, stored in a user device memory 16, and executed with a user device processor 15.

Furthermore, the system and method of the present invention may be configured to interact with an external service or third party service over the communications network 600 and suitable communication protocol. In the present invention, the external service may be for example an external map service, officials database or the like.

The electronic identification system of figure 26 may be configured to carry out the method of the present invention.

Alternatively, the user device 30 may be configured to carry out the method of the present invention.

The invention has been described above with reference to the examples shown in the figures. However, the invention is in no way restricted to the above examples but may vary within the scope of the claims.

## Claims

1. A method for identifying authenticity of a cylindrical object (10) having a cylinder axis (A) from photographic images, the method comprises rotating the cylindrical object (10) and imaging device (32) in relation to each other around the cylinder axis (A) of the cylindrical object (10) and the method further comprises the following steps carried out by an electronic identification system (30, 150) having one or more processors (15, 152) and at least one memory (16, 154) storing instructions (17, 156) for execution by the one or more processors:
- a) acquiring two or more photographic images (40, 50, 51, 52, 53, 54) of the cylindrical object (10) from different angles around the cylinder axis (A) with an imaging device (30);
- b) generating a target image (70) from the two or more photographic images (40, 50, 51, 52, 53, 54) by image stitching;
- c) analysing the target image (70) in relation to a reference image (90) representing an original cylindrical object and generating an identification output based on the analysing; and
- d) generating an authenticity identification indication based on the identification output
**c h a r a c t e r i z e d** in that the step a) comprises the following steps carried out two or more times:
- acquiring a photographic image (40, 50, 51, 52, 53, 54) of the cylindrical object (10) from the direction transversal to the cylinder axis (A) with the imaging device (30);
- detecting one or more keypoints (61, 62, 63, 64, 65) in the photographic image (40, 50, 51, 52, 53, 54);
- tracking the one or more detected keypoints (61, 62, 63, 64, 65) during the relative rotation of the cylindrical object (10) and the imaging device (30) around the cylinder axis (A) of the cylindrical object (10); and
- calculating displacement of the one or more detected keypoints (61, 62, 63, 64) due to the relative rotation during the tracking; and
- acquiring a new photographic image (40, 50, 51, 52, 53, 54) of the cylindrical object (10) automatically from the direction transversal to the cylinder axis (A) with the imaging device (30) when the calculated displacement corresponds a pre-determined displacement value.

2. A method according to claim 1, **c h a r a c t e r i z e d** in that the step a) comprises:
- acquiring the two or more photographic images (40, 50, 51, 52, 53, 54) of the cylindrical object (10) around the cylinder axis (A) from directions transversal to the cylinder axis (A) with the imaging device (30) along the rotation of the cylindrical object (10) and imaging device (32) in relation to each other around the cylinder axis (A) of the cylindrical object (10); or
- automatically acquiring the two or more photographic images (40, 50, 51, 52, 53, 54) of the cylindrical object (10) around the cylinder axis (A) from directions transversal to the cylinder axis (A) with the imaging device (30) along the rotation of the cylindrical object (10) and the imaging device (30) in relation to each other around the cylinder axis (A) of the cylindrical object (10).

3. A method according to claim 1 or 2, **c h a r a c t e r i z e d** in that the step a) comprises:
- a1) acquiring a first photographic image (40, 51) of the cylindrical object (10) from the direction transversal to the cylinder axis (A) with the imaging device (30);
- a2) detecting one or more first keypoints (61, 62, 63) in the first photographic image (40, 51);
- a3) tracking the one or more first detected keypoints (61, 62, 63) during the relative rotation of the cylindrical object (10) and the imaging device (30) in relation to each other around the cylinder axis (A) of the cylindrical object (10); and
- a4) calculating displacement of the one or more first detected keypoints (61, 62, 63) due to the relative rotation during the tracking; and
- a5) acquiring a second photographic image (50, 52) of the cylindrical object (10) from the direction transversal to the cylinder axis (A) with the imaging device (30) when the calculated displacement of the one or more first detected keypoints (61, 62, 63) corresponds a pre-determined displacement value; or
- a1) acquiring a first photographic image (40, 51) of the cylindrical object (10) from the direction transversal to the cylinder axis (A) with the imaging device (30);
- a2) detecting one or more first keypoints (61, 62, 63) in the first photographic image (40, 51);
- a3) tracking the one or more first detected keypoints (61, 62, 63) during the relative rotation of the cylindrical object (10) and the imaging device (30) in relation to each other around the cylinder axis (A) of the cylindrical object (10); and
- a4) calculating displacement of the one or more first detected keypoints (61, 62, 63) due to the relative rotation during the tracking;
- a5) acquiring a second photographic image (50, 52) of the cylindrical object (10) from the direction transversal to the cylinder axis (A) with the imaging device (30) when the calculated displacement of the one or more first detected keypoints (61, 62, 63) corresponds a pre-determined displacement value;
- a6) detecting one or more second keypoints (64) in the second photographic image (50, 52);
- a7) tracking the one or more second detected keypoints (64) during the relative rotation of the cylindrical object (10) and the imaging device (30) in relation to each other around the cylinder axis (A) of the cylindrical object (10); and
- a8) calculating displacement of the one or more second detected keypoints (64) due to the relative rotation during the tracking; and
- a9) acquiring a subsequent photographic image (53, 54) of the cylindrical object (10) from the direction transversal to the cylinder axis (A) with the imaging device (30) when the calculated displacement of the one or more second detected keypoints (64) corresponds the pre-determined displacement value; or
- a1) acquiring a first photographic image (40, 51) of the cylindrical object (10) from the direction transversal to the cylinder axis (A) with the imaging device (30);
- a2) detecting one or more first keypoints (61, 62, 63) in the first photographic image (40, 51);
- a3) tracking the one or more first detected keypoints (61, 62, 63) during the relative rotation of the cylindrical object (10) and the imaging device (30) in relation to each other around the cylinder axis (A) of the cylindrical object (10); and
- a4) calculating displacement of the one or more first detected keypoints (61, 62, 63) due to the relative rotation during the tracking;
- a5) acquiring a second photographic image (50, 52) of the cylindrical object (10) from the direction transversal to the cylinder axis (A) with the imaging device (30) when the calculated displacement of the one or more first detected keypoints (61, 62, 63) corresponds a pre-determined displacement value;
- a6) detecting one or more second keypoints (64) in the second photographic image (50, 52);
- a7) tracking the one or more second detected keypoints (64) during the relative rotation of the cylindrical object (10) and the imaging device (30) in relation to each other around the cylinder axis (A) of the cylindrical object (10); and
- a8) calculating displacement of the one or more second detected keypoints (64) due to the relative rotation during the tracking; and
- a9) acquiring a subsequent photographic image (53, 54) of the cylindrical object (10) from the direction transversal to the cylinder axis (A) with the imaging device (30) when the calculated displacement of the one or more second detected keypoints (64) corresponds the pre-determined displacement value; and
- a10) repeating the following steps one or more times:
- detecting one or more subsequent keypoints (64) in the subsequent photographic image (53, 54);
- rotating the cylindrical object (10) and the imaging device (30) in relation to each other around the cylinder axis (A) of the cylindrical object (10);
- tracking the one or more subsequent detected keypoints (64) during the relative rotation of the cylindrical object (10) and the imaging device (30) in relation to each other around the cylinder axis (A) of the cylindrical object (10); and
- calculating displacement of the one or more subsequent detected keypoints (64) due to the relative rotation during the tracking; and
- acquiring a new subsequent photographic image (53, 54) of the cylindrical object (10) from the direction transversal to the cylinder axis (A) with the imaging device (30) when the calculated displacement of the one or more subsequent detected keypoints (64) corresponds the pre-determined displacement value.

4. A method according to claim 1 or 2, **c h a r a c t e r i z e d** in that:
- the step a) comprises:
- a11) detecting side borders (43, 44) of the cylindrical object (10) during the relative rotation of the cylindrical object (10) and imaging device (30);
- a12) acquiring a first photographic image (40, 51) of the cylindrical object (10) from the direction transversal to the cylinder axis (A) with the imaging device (30);
- a13) detecting one or more first keypoints (61, 62, 63) in the first photographic image (40, 51);
- a14) tracking the one or more first detected keypoints (61, 62, 63) during the relative rotation of the cylindrical object (10) and the imaging device (30) in relation to the detected side borders (43, 44); and
- a15) calculating displacement of the one or more first detected keypoints (61, 62, 63) in relation to the detected side borders (43, 44) of the cylindrical object (10) due to the relative rotation during the tracking; and
- a16) acquiring a second photographic image (50, 52) of the cylindrical object (10) from the direction transversal to the cylinder axis (A) with the imaging device (30) when the calculated displacement of the one or more first detected keypoints (61, 62, 63) corresponds a pre-determined displacement value; or
- a11) detecting side borders (43, 44) of the cylindrical object (10) during the relative rotation of the cylindrical object (10) and imaging device (30);
- a12) acquiring a first photographic image (40, 51) of the cylindrical object (10) from the direction transversal to the cylinder axis (A) with the imaging device (30);
- a13) detecting one or more first keypoints (61, 62, 63) in the first photographic image (40, 51);
- a14) tracking the one or more first detected keypoints (61, 62, 63) during the relative rotation of the cylindrical object (10) and the imaging device (30) in relation to the detected side borders (43, 44); and
- a15) calculating displacement of the one or more first detected keypoints (61, 62, 63) in relation to the detected side borders (43, 44) of the cylindrical object (10) due to the relative rotation during the tracking; and
- a16) acquiring a second photographic image (50, 52) of the cylindrical object (10) from the direction transversal to the cylinder axis (A) with the imaging device (30) when the calculated displacement of the one or more first detected keypoints (61, 62, 63) corresponds a pre-determined displacement value;
- a17) detecting one or more second keypoints (64) in the second photographic image (50, 52);
- a18) tracking the one or more second detected keypoints (64) during the relative rotation of the cylindrical object (10) and the imaging device (30) in relation to the detected side borders (43, 44); and
- a19) calculating displacement of the one or more second detected keypoints (64) in relation to the detected side borders (43, 44) of the cylindrical object (10) due to the relative rotation during the tracking; and
- a20) acquiring a subsequent photographic image (53, 54) of the cylindrical object (10) from the direction transversal to the cylinder axis (A) with the imaging device (30) when the calculated displacement of the one or more second detected keypoints (64) corresponds the pre-determined displacement value; or
- a11) detecting side borders (43, 44) of the cylindrical object (10) during the relative rotation of the cylindrical object (10) and imaging device (30);
- a12) acquiring a first photographic image (40, 51) of the cylindrical object (10) from the direction transversal to the cylinder axis (A) with the imaging device (30);
- a13) detecting one or more first keypoints (61, 62, 63) in the first photographic image (40, 51);
- a14) tracking the one or more first detected keypoints (61, 62, 63) during the relative rotation of the cylindrical object (10) and the imaging device (30) in relation to the detected side borders (43, 44); and
- a15) calculating displacement of the one or more first detected keypoints (61, 62, 63) in relation to the detected side borders (43, 44) of the cylindrical object (10) due to the relative rotation during the tracking; and
- a16) acquiring a second photographic image (50, 52) of the cylindrical object (10) from the direction transversal to the cylinder axis (A) with the imaging device (30) when the calculated displacement of the one or more first detected keypoints (61, 62, 63) corresponds a pre-determined displacement value;
- a17) detecting one or more second keypoints (64) in the second photographic image (50, 52);
- a18) tracking the one or more second detected keypoints (64) during the relative rotation of the cylindrical object (10) and the imaging device (30) in relation to the detected side borders (43, 44); and
- a19) calculating displacement of the one or more second detected keypoints (64) in relation to the detected side borders (43, 44) of the cylindrical object (10) due to the relative rotation during the tracking; and
- a20) acquiring a subsequent photographic image (53, 54) of the cylindrical object (10) from the direction transversal to the cylinder axis (A) with the imaging device (30) when the calculated displacement of the one or more second detected keypoints (64) corresponds the pre-determined displacement value; or
- a21) repeating the following steps one or more times:
- detecting one or more subsequent keypoints (64) in the subsequent photographic image (53, 54);
- rotating the cylindrical object (10) and the imaging device (30) in relation to each other around the cylinder axis (A) of the cylindrical object (10);
- tracking the one or more subsequent detected keypoints (64) during the relative rotation of the cylindrical object (10) and the imaging device (30) in relation to the detected side borders (43, 44);
- calculating displacement of the one or more subsequent detected keypoints (64) in relation to the detected side borders (43, 44) of the cylindrical object (10) due to the relative rotation during the tracking; and
- acquiring a new subsequent photographic image (53, 54) of the cylindrical object (10) from the direction transversal to the cylinder axis (A) with the imaging device (30) when the calculated displacement of the one or more subsequent detected keypoints (64) corresponds the pre-determined displacement value.

5. A method according to any one of claims 1 to 4, **c h a r a c t e r i z e d** in that:
- the pre-determined displacement value is determined based on diameter of the cylindrical object (10); or
- the pre-determined displacement value is determined based on minimum diameter (D), or maximum diameter (D) or average diameter (D) of the cylindrical object (10); or
- the pre-determined displacement value is determined based on the diameter (D) of the cylindrical object (10) such that the pre-determined displacement value is inversely proportional to the diameter (D) of cylindrical object (10).

6. A method according to any one of claims 1 to 5, **c h a r a c t e r i z e d** in that the step b) comprise:
- generating view angle corrected images of cylindrical object (10) in the two or more photographic images (40, 50, 51, 52, 53, 54) by distorting the two or more photographic images (40, 50, 51, 52, 53, 54), the view angle corrected images representing front projection images of the cylindrical object (10) perpendicular to the cylinder axis (A); or
- generating view angle corrected images of cylindrical object (10) in the two or more photographic images (40, 50, 51, 52, 53, 54), generating view angle corrected images of cylindrical object (10) comprises altering the view angle by distorting the two or more photographic images (40, 50, 51, 52, 53, 54), the view angle corrected images representing front projection images of the cylindrical object (10) perpendicular to the cylinder axis (A).

7. A method according to any one of claims 1 to 6, **c h a r a c t e r i z e d** in that the step b) comprise:
- generating rectilinear corrected images of cylindrical object (10) in the two or more photographic images (40, 50, 51, 52, 53, 54), by distorting the two or more photographic images (40, 50, 51, 52, 53, 54), the rectilinear projection images representing rectilinear projection of the cylindrical object (10); or
- generating rectilinear corrected images of the cylindrical object (10) in the two or more photographic images (40, 50, 51, 52, 53, 54), generating rectilinear projection images of the cylindrical object (10) comprises by unrolling the cylindrical object (10) by distorting the two or more photographic images (40, 50, 51, 52, 53, 54), the rectilinear projection images representing rectilinear of the cylindrical object (10).

8. A method according to any one of claims 1 to 7, **c h a r a c t e r i z e d** in that the step b) comprise:
- image stitching the two or more photographic images (40, 50, 51, 52, 53, 54) to generate the target image (70), the target image (70) representing rectilinear projection of the cylindrical object (10) around the cylinder axis (A); or
- image stitching the two or more view angle corrected photographic images (40, 50, 51, 52, 53, 54) to generate the target image (70), the target image (70) representing rectilinear projection of the cylindrical object (10) around the cylinder axis (A); or
- image stitching the two or more rectilinear corrected photographic images (40, 50, 51, 52, 53, 54) to generate the target image (70), the target image (70) representing rectilinear projection of the cylindrical object (10) around the cylinder axis (A); or
- image stitching the two or more view angle corrected and rectilinear corrected photographic images (40, 50, 51, 52, 53, 54) to generate the target image (70), the target image (70) representing rectilinear projection of the cylindrical object (10) around the cylinder axis (A).

9. A method according to any one of claims 1 to 8, **c h a r a c t e r i z e d** in that the step b) comprises:
- detecting one or more alignment keypoints (63, 64, 65) in the two or more photographic images (51, 52, 53, 54);
- matching corresponding alignment keypoints (63, 64, 65) of the two or more photographic images (51, 52, 53, 54);
- aligning the corresponding alignment keypoints (63, 64, 65) of the two or more photographic images (51, 52, 53, 54) to each other; and
- compositing the two or more aligned photographic images (40, 50, 51, 52, 53, 54), respectively, to form the target image (70).

10. A method according to any one of claims 1 to 9, **c h a r a c t e r i z e d** in that the step c) comprises:
- aligning the target image (70) to the reference image (90) by distorting the target image (70) and analysing the aligned target image (70) in relation to the reference image (90); or
- aligning the target image (70) to the reference image (90) by distorting the target image (70) to match the reference image (90) and analysing the aligned target image (70) in relation to the reference image (90);
- detecting corresponding keypoints in the target image (70) and in the reference image (90);
- matching corresponding alignment keypoints of the target image (70) and the reference image (90);
- aligning the corresponding keypoints in the target image (70) and in the reference image (90) to each other by distorting the target image; or
- associating and locking a reference image grid (100) on the reference image (90);
- associating and locking a target image grid (110) on the target image (70); and
- aligning the target image (70) to the reference image (90) by distorting the target image grid (110) in relation to the reference image grid (100) for aligning the target image (70) to the reference image (90).

11. A mobile user device (30) having an imaging device (30), one or more device processors (15) and at least one device memory (16) for storing device instructions (17) which when executed by the one or more device processors (15) cause the mobile user device (30) to:
- a) acquire two or more photographic images (40, 50, 51, 52, 53, 54) of a cylindrical object (10) from different angles around a cylinder axis (A) with the imaging device (32) during rotation of the cylindrical object (10) and imaging device (32) in relation to each other around the cylinder axis (A) of the cylindrical object (10);
- b) generate a target image (70) from the two or more photographic images (40, 50, 51, 52, 53, 54) by image stitching;
- c) analyse the target image (70) in relation to a reference image (90) representing an original cylindrical object and generating an identification output based on the analysing for identifying authenticity of the cylindrical object (10); and
- d) generate an authenticity identification indication based on the identification output,
**c h a r a c t e r i z e d** in that the device instructions (17) are in step a) configured to:
- acquire a photographic image (40, 50, 51, 52, 53, 54) of the cylindrical object (10) from the direction transversal to the cylinder axis (A) with the imaging device (30);
- detect one or more keypoints (61, 62, 63, 64, 65) in the photographic image (40, 50, 51, 52, 53, 54);
- track the one or more detected keypoints (61, 62, 63, 64, 65) during the relative rotation of the cylindrical object (10) and the imaging device (30) around the cylinder axis (A) of the cylindrical object (10); and
- calculate displacement of the one or more detected keypoints (61, 62, 63, 64) due to the relative rotation during the tracking; and
- acquire a new photographic image (40, 50, 51, 52, 53, 54) of the cylindrical object (10) automatically from the direction transversal to the cylinder axis (A) with the imaging device (30) when the calculated displacement corresponds a pre-determined displacement value.

12. A mobile user device (30) according to claim 11, **c h a r a c t e r i z e d** in that the at least one device memory (16) is configured to store device instructions (17) which when executed by the one or more device processors (15) cause the mobile user device (30) to carry out a method according to any one of claims 1 to 10.

13. An electronic identification system (30, 150) comprising a mobile user device (30) having an imaging device (30), one or more device processors (15) and at least one device memory (16) for storing device instructions (17) and an identification server system (150) having one or more server processors (152) and at least one server memory (154) storing server instructions (156), the device instructions (17) and the server instructions when executed by the one or more processors (15) being caused the mobile user device (30) and the identification server system (150) to:
- a) acquiring two or more photographic images (40, 50, 51, 52, 53, 54) of the cylindrical object (10) from different angles around the cylinder axis (A) with an imaging device (30);
- b) generating a target image (70) from the two or more photographic images (40, 50, 51, 52, 53, 54) by image stitching;
- c) analysing the target image (70) in relation to a reference image (90) representing an original cylindrical object and generating an identification output based on the analysing; and
- d) generating an authenticity identification indication based on the identification output,
**c h a r a c t e r i z e d** in that the device instructions (17) are in step a) configured to:
- acquire a photographic image (40, 50, 51, 52, 53, 54) of the cylindrical object (10) from the direction transversal to the cylinder axis (A) with the imaging device (30);
- detect one or more keypoints (61, 62, 63, 64, 65) in the photographic image (40, 50, 51, 52, 53, 54);
- track the one or more detected keypoints (61, 62, 63, 64, 65) during the relative rotation of the cylindrical object (10) and the imaging device (30) around the cylinder axis (A) of the cylindrical object (10); and
- calculate displacement of the one or more detected keypoints (61, 62, 63, 64) due to the relative rotation during the tracking; and
- acquire a new photographic image (40, 50, 51, 52, 53, 54) of the cylindrical object (10) automatically from the direction transversal to the cylinder axis (A) with the imaging device (30) when the calculated displacement corresponds a pre-determined displacement value.

14. An electronic identification system (30, 150) according to claim 13, **c h a r a c t e r i z e d** in that the at least one device memory (16) and the at least one server memory (154) are configured to store device instructions (17) and server instructions (156) which when executed by the one or more device processors (15) and one or more server processors (152) cause the electronic identification system (30, 150) to carry out a method according to any one of claims 1 to 10.

## Patentansprüche

1. Verfahren zum Identifizieren der Authentizität eines zylindrischen Objekts (10), das eine Zylinderachse (A) aufweist, aus fotografischen Bildern, wobei das Verfahren das Drehen des zylindrischen Objekts (10) und der Bildgebungsvorrichtung (32) relativ zueinander um die Zylinderachse (A) des zylindrischen Objekts (10) umfasst, und das Verfahren weiter die folgenden Schritte umfasst, die von einem elektronischen Identifizierungssystem (30, 150) ausgeführt werden, das einen oder mehrere Prozessoren (15, 152) und mindestens einen Speicher (16, 154) aufweist, der Anweisungen (17, 156) für die Ausführung durch den einen oder die mehreren Prozessoren speichert:
- a) Erheben von zwei oder mehreren fotografischen Bildern (40, 50, 51, 52, 53, 54) des zylindrischen Objekts (10) aus unterschiedlichen Winkeln um die Zylinderachse (A) mit einer Bildgebungsvorrichtung (30);
- b) Erzeugen eines Zielbildes (70) aus den zwei oder mehreren fotografischen Bildern (40, 50, 51, 52, 53, 54) durch Bildzusammenfügung;
- c) Analysieren des Zielbildes (70) in Bezug auf ein Referenzbild (90), das ein ursprüngliches zylindrisches Objekt darstellt, und Erzeugen einer Identifizierungsausgabe basierend auf dem Analysieren; und
- d) Erzeugen einer Authentizitätsidentifizierungsangabe basierend auf der Identifizierungsausgabe
**dadurch gekennzeichnet, dass** der Schritt a) die folgenden Schritte umfasst, die zwei- oder mehrmals ausgeführt werden:
- Erheben eines fotografischen Bildes (40, 50, 51, 52, 53, 54) des zylindrischen Objekts (10) aus der Richtung quer zu der Zylinderachse (A) mit der Bildgebungsvorrichtung (30);
- Erfassen eines oder mehrerer Schlüsselpunkte (61, 62, 63, 64, 65) in dem fotografischen Bild (40, 50, 51, 52, 53, 54);
- Verfolgen des einen oder der mehreren erfassten Schlüsselpunkte (61, 62, 63, 64, 65) während der relativen Rotation des zylindrischen Objekts (10) und der Bildgebungsvorrichtung (30) um die Zylinderachse (A) des zylindrischen Objekts (10); und
- Berechnen von Verschiebung des einen oder der mehreren erfassten Schlüsselpunkte (61, 62, 63, 64) aufgrund der relativen Rotation während des Verfolgens; und
- automatisches Erheben eines neuen fotografischen Bildes (40, 50, 51, 52, 53, 54) des zylindrischen Objekts (10) aus der Richtung quer zu der Zylinderachse (A) mit der Bildgebungsvorrichtung (30), wenn die berechnete Verschiebung einem vorbestimmten Verschiebungswert entspricht.

2. Verfahren nach Anspruch 1, **dadurch gekennzeichnet, dass** der Schritt a) Folgendes umfasst:
- Erheben der zwei oder mehreren fotografischen Bilder (40, 50, 51, 52, 53, 54) des zylindrischen Objekts (10) um die Zylinderachse (A) aus Richtungen quer zu der Zylinderachse (A) mit der Bildgebungsvorrichtung (30) entlang der Rotation des zylindrischen Objekts (10) und der Bildgebungsvorrichtung (32) in Bezug zueinander um die Zylinderachse (A) des zylindrischen Objekts (10); oder
- automatisches Erheben der zwei oder mehreren fotografischen Bilder (40, 50, 51, 52, 53, 54) des zylindrischen Objekts (10) um die Zylinderachse (A) aus Richtungen quer zu der Zylinderachse (A) mit der Bildgebungsvorrichtung (30) entlang der Rotation des zylindrischen Objekts (10) und der Bildgebungsvorrichtung (30) in Bezug zueinander um die Zylinderachse (A) des zylindrischen Objekts (10).

3. Verfahren nach Anspruch 1 oder 2, **dadurch gekennzeichnet, dass** der zweite Schritt a) Folgendes umfasst:
- a1) Erheben eines ersten fotografischen Bildes (40, 51) des zylindrischen Objekts (10) aus der Richtung quer zu der Zylinderachse (A) mit der Bildgebungsvorrichtung (30);
- a2) Erfassen eines oder mehrerer erster Schlüsselpunkte (61, 62, 63) in dem ersten fotografischen Bild (40, 51);
- a3) Verfolgen des einen oder der mehreren ersten erfassten Schlüsselpunkte (61, 62, 63) während der relativen Rotation des zylindrischen Objekts (10) und der Bildgebungsvorrichtung (30) in Bezug zueinander um die Zylinderachse (A) des zylindrischen Objekts (10); und
- a4) Berechnen von Verschiebung des einen oder der mehreren ersten erfassten Schlüsselpunkte (61, 62, 63) aufgrund der relativen Rotation während des Verfolgens; und
- a5) Erheben eines zweiten fotografischen Bildes (50, 52) des zylindrischen Objekts (10) aus der Richtung quer zu der Zylinderachse (A) mit der Bildgebungsvorrichtung (30), wenn die berechnete Verschiebung des einen oder der mehreren ersten erfassten Schlüsselpunkte (61, 62, 63) einem vorbestimmten Verschiebungswert entspricht; oder
- a1) Erheben eines ersten fotografischen Bildes (40, 51) des zylindrischen Objekts (10) aus der Richtung quer zu der Zylinderachse (A) mit der Bildgebungsvorrichtung (30);
- a2) Erfassen eines oder mehrerer erster Schlüsselpunkte (61, 62, 63) in dem ersten fotografischen Bild (40, 51);
- a3) Verfolgen des einen oder der mehreren ersten erfassten Schlüsselpunkte (61, 62, 63) während der relativen Rotation des zylindrischen Objekts (10) und der Bildgebungsvorrichtung (30) in Bezug zueinander um die Zylinderachse (A) des zylindrischen Objekts (10); und
- a4) Berechnen von Verschiebung des einen oder der mehreren ersten erfassten Schlüsselpunkte (61, 62, 63) aufgrund der relativen Rotation während des Verfolgens;
- a5) Erheben eines zweiten fotografischen Bildes (50, 52) des zylindrischen Objekts (10) aus der Richtung quer zu der Zylinderachse (A) mit der Bildgebungsvorrichtung (30), wenn die berechnete Verschiebung des einen oder der mehreren ersten erfassten Schlüsselpunkte (61, 62, 63) einem vorbestimmten Verschiebungswert entspricht;
- a6) Erfassen eines oder mehrerer zweiter Schlüsselpunkte (64) in dem zweiten fotografischen Bild (50, 52);
- a7) Verfolgen des einen oder der mehreren zweiten erfassten Schlüsselpunkte (64) während der relativen Rotation des zylindrischen Objekts (10) und der Bildgebungsvorrichtung (30) in Bezug zueinander um die Zylinderachse (A) des zylindrischen Objekts (10); und
- a8) Berechnen von Verschiebung des einen oder der mehreren zweiten erfassten Schlüsselpunkte (64) aufgrund der relativen Rotation während des Verfolgens; und
- a9) Erheben eines nachfolgenden fotografischen Bildes (53, 54) des zylindrischen Objekts (10) aus der Richtung quer zu der Zylinderachse (A) mit der Bildgebungsvorrichtung (30), wenn die berechnete Verschiebung des einen oder der mehreren zweiten erfassten Schlüsselpunkte (64) dem vorbestimmten Verschiebungswert entspricht; oder
- a1) Erheben eines ersten fotografischen Bildes (40, 51) des zylindrischen Objekts (10) aus der Richtung quer zu der Zylinderachse (A) mit der Bildgebungsvorrichtung (30);
- a2) Erfassen eines oder mehrerer erster Schlüsselpunkte (61, 62, 63) in dem ersten fotografischen Bild (40, 51);
- a3) Verfolgen des einen oder der mehreren ersten erfassten Schlüsselpunkte (61, 62, 63) während der relativen Rotation des zylindrischen Objekts (10) und der Bildgebungsvorrichtung (30) in Bezug zueinander um die Zylinderachse (A) des zylindrischen Objekts (10); und
- a4) Berechnen von Verschiebung des einen oder der mehreren ersten erfassten Schlüsselpunkte (61, 62, 63) aufgrund der relativen Rotation während des Verfolgens;
- a5) Erheben eines zweiten fotografischen Bildes (50, 52) des zylindrischen Objekts (10) aus der Richtung quer zu der Zylinderachse (A) mit der Bildgebungsvorrichtung (30), wenn die berechnete Verschiebung des einen oder der mehreren ersten erfassten Schlüsselpunkte (61, 62, 63) einem vorbestimmten Verschiebungswert entspricht;
- a6) Erfassen eines oder mehrerer zweiter Schlüsselpunkte (64) in dem zweiten fotografischen Bild (50, 52);
- a7) Verfolgen des einen oder der mehreren zweiten erfassten Schlüsselpunkte (64) während der relativen Rotation des zylindrischen Objekts (10) und der Bildgebungsvorrichtung (30) in Bezug zueinander um die Zylinderachse (A) des zylindrischen Objekts (10); und
- a8) Berechnen von Verschiebung des einen oder der mehreren zweiten erfassten Schlüsselpunkte (64) aufgrund der relativen Rotation während des Verfolgens; und
- a9) Erheben eines nachfolgenden fotografischen Bildes (53, 54) des zylindrischen Objekts (10) aus der Richtung quer zu der Zylinderachse (A) mit der Bildgebungsvorrichtung (30), wenn die berechnete Verschiebung des einen oder der mehreren zweiten erfassten Schlüsselpunkte (64) dem vorbestimmten Verschiebungswert entspricht; und
- a10) Wiederholen der folgenden Schritte ein- oder mehrmals:
- Erfassen eines oder mehrerer nachfolgender Schlüsselpunkte (64) in dem nachfolgenden fotografischen Bild (53, 54);
- Drehen des zylindrischen Objekts (10) und der Bildgebungsvorrichtung (30) relativ zueinander um die Zylinderachse (A) des zylindrischen Objekts (10);
- Verfolgen des einen oder der mehreren nachfolgenden erfassten Schlüsselpunkte (64) während der relativen Rotation des zylindrischen Objekts (10) und der Bildgebungsvorrichtung (30) in Bezug zueinander um die Zylinderachse (A) des zylindrischen Objekts (10); und
- Berechnen von Verschiebung des einen oder der mehreren nachfolgenden erfassten Schlüsselpunkte (64) aufgrund der relativen Rotation während des Verfolgens; und
- Erheben eines neuen nachfolgenden fotografischen Bildes (53, 54) des zylindrischen Objekts (10) aus der Richtung quer zu der Zylinderachse (A) mit der Bildgebungsvorrichtung (30), wenn die berechnete Verschiebung des einen oder der mehreren nachfolgenden erfassten Schlüsselpunkte (64) dem vorbestimmten Verschiebungswert entspricht.

4. Verfahren nach Anspruch 1 oder 2, **dadurch gekennzeichnet, dass:**
- der Schritt a) umfasst:
- a11) Erfassen von Seitenrändern (43, 44) des zylindrischen Objekts (10) während der relativen Rotation des zylindrischen Objekts (10) und der Bildgebungsvorrichtung (30);
- a12) Erheben eines ersten fotografischen Bildes (40, 51) des zylindrischen Objekts (10) aus der Richtung quer zu der Zylinderachse (A) mit der Bildgebungsvorrichtung (30);
- a13) Erfassen eines oder mehrerer erster Schlüsselpunkte (61, 62, 63) in dem ersten fotografischen Bild (40, 51);
- a14) Verfolgen des einen oder der mehreren ersten erfassten Schlüsselpunkte (61, 62, 63) während der relativen Rotation des zylindrischen Objekts (10) und der Bildgebungsvorrichtung (30) in Bezug auf die erfassten Seitenränder (43, 44); und
- a15) Berechnen von Verschiebung des einen oder der mehreren ersten erfassten Schlüsselpunkte (61, 62, 63) in Bezug auf die erfassten Seitenränder (43, 44) des zylindrischen Objekts (10) aufgrund der relativen Rotation während des Verfolgens; und
- a16) Erheben eines zweiten fotografischen Bildes (50, 52) des zylindrischen Objekts (10) aus der Richtung quer zu der Zylinderachse (A) mit der Bildgebungsvorrichtung (30), wenn die berechnete Verschiebung des einen oder der mehreren ersten erfassten Schlüsselpunkte (61, 62, 63) einem vorbestimmten Verschiebungswert entspricht; oder
- a11) Erfassen von Seitenrändern (43, 44) des zylindrischen Objekts (10) während der relativen Rotation des zylindrischen Objekts (10) und der Bildgebungsvorrichtung (30);
- a12) Erheben eines ersten fotografischen Bildes (40, 51) des zylindrischen Objekts (10) aus der Richtung quer zu der Zylinderachse (A) mit der Bildgebungsvorrichtung (30);
- a13) Erfassen eines oder mehrerer erster Schlüsselpunkte (61, 62, 63) in dem ersten fotografischen Bild (40, 51);
- a14) Verfolgen des einen oder der mehreren ersten erfassten Schlüsselpunkte (61, 62, 63) während der relativen Rotation des zylindrischen Objekts (10) und der Bildgebungsvorrichtung (30) in Bezug auf die erfassten Seitenränder (43, 44); und
- a15) Berechnen von Verschiebung des einen oder der mehreren ersten erfassten Schlüsselpunkte (61, 62, 63) in Bezug auf die erfassten Seitenränder (43, 44) des zylindrischen Objekts (10) aufgrund der relativen Rotation während des Verfolgens; und
- a16) Erheben eines zweiten fotografischen Bildes (50, 52) des zylindrischen Objekts (10) aus der Richtung quer zu der Zylinderachse (A) mit der Bildgebungsvorrichtung (30), wenn die berechnete Verschiebung des einen oder der mehreren ersten erfassten Schlüsselpunkte (61, 62, 63) einem vorbestimmten Verschiebungswert entspricht;
- a17) Erfassen eines oder mehrerer zweiter Schlüsselpunkte (64) in dem zweiten fotografischen Bild (50, 52);
- a18) Verfolgen des einen oder der mehreren zweiten erfassten Schlüsselpunkte (64) während der relativen Rotation des zylindrischen Objekts (10) und der Bildgebungsvorrichtung (30) in Bezug auf die erfassten Seitenränder (43, 44); und
- a19) Berechnen von Verschiebung des einen oder der mehreren zweiten erfassten Schlüsselpunkte (64) in Bezug auf die erfassten Seitenränder (43, 44) des zylindrischen Objekts (10) aufgrund der relativen Rotation während des Verfolgens; und
- a20) Erheben eines nachfolgenden fotografischen Bildes (53, 54) des zylindrischen Objekts (10) aus der Richtung quer zu der Zylinderachse (A) mit der Bildgebungsvorrichtung (30), wenn die berechnete Verschiebung des einen oder der mehreren zweiten erfassten Schlüsselpunkte (64) dem vorbestimmten Verschiebungswert entspricht; oder
- a11) Erfassen von Seitenrändern (43, 44) des zylindrischen Objekts (10) während der relativen Rotation des zylindrischen Objekts (10) und der Bildgebungsvorrichtung (30);
- a12) Erheben eines ersten fotografischen Bildes (40, 51) des zylindrischen Objekts (10) aus der Richtung quer zu der Zylinderachse (A) mit der Bildgebungsvorrichtung (30);
- a13) Erfassen eines oder mehrerer erster Schlüsselpunkte (61, 62, 63) in dem ersten fotografischen Bild (40, 51);
- a14) Verfolgen des einen oder der mehreren ersten erfassten Schlüsselpunkte (61, 62, 63) während der relativen Rotation des zylindrischen Objekts (10) und der Bildgebungsvorrichtung (30) in Bezug auf die erfassten Seitenränder (43, 44); und
- a15) Berechnen von Verschiebung des einen oder der mehreren ersten erfassten Schlüsselpunkte (61, 62, 63) in Bezug auf die erfassten Seitenränder (43, 44) des zylindrischen Objekts (10) aufgrund der relativen Rotation während des Verfolgens; und
- a16) Erheben eines zweiten fotografischen Bildes (50, 52) des zylindrischen Objekts (10) aus der Richtung quer zu der Zylinderachse (A) mit der Bildgebungsvorrichtung (30), wenn die berechnete Verschiebung des einen oder der mehreren ersten erfassten Schlüsselpunkte (61, 62, 63) einem vorbestimmten Verschiebungswert entspricht;
- a17) Erfassen eines oder mehrerer zweiter Schlüsselpunkte (64) in dem zweiten fotografischen Bild (50, 52);
- a18) Verfolgen des einen oder der mehreren zweiten erfassten Schlüsselpunkte (64) während der relativen Rotation des zylindrischen Objekts (10) und der Bildgebungsvorrichtung (30) in Bezug auf die erfassten Seitenränder (43, 44); und
- a19) Berechnen von Verschiebung des einen oder der mehreren zweiten erfassten Schlüsselpunkte (64) in Bezug auf die erfassten Seitenränder (43, 44) des zylindrischen Objekts (10) aufgrund der relativen Rotation während des Verfolgens; und
- a20) Erheben eines nachfolgenden fotografischen Bildes (53, 54) des zylindrischen Objekts (10) aus der Richtung quer zu der Zylinderachse (A) mit der Bildgebungsvorrichtung (30), wenn die berechnete Verschiebung des einen oder der mehreren zweiten erfassten Schlüsselpunkte (64) dem vorbestimmten Verschiebungswert entspricht; oder
- a21) ein- oder mehrmaliges Wiederholen der folgenden Schritte:
- Erfassen eines oder mehrerer nachfolgender Schlüsselpunkte (64) in dem nachfolgenden fotografischen Bild (53, 54);
- Drehen des zylindrischen Objekts (10) und der Bildgebungsvorrichtung (30) relativ zueinander um die Zylinderachse (A) des zylindrischen Objekts (10);
- Verfolgen des einen oder der mehreren nachfolgenden erfassten Schlüsselpunkte (64) während der relativen Rotation des zylindrischen Objekts (10) und der Bildgebungsvorrichtung (30) in Bezug auf die erfassten Seitenränder (43, 44);
- Berechnen von Verschiebung des einen oder der mehreren nachfolgenden erfassten Schlüsselpunkte (64) in Bezug auf die erfassten Seitenränder (43, 44) des zylindrischen Objekts (10) aufgrund der relativen Rotation während des Verfolgens; und
- Erheben eines neuen nachfolgenden fotografischen Bildes (53, 54) des zylindrischen Objekts (10) aus der Richtung quer zu der Zylinderachse (A) mit der Bildgebungsvorrichtung (30), wenn die berechnete Verschiebung des einen oder der mehreren nachfolgenden erfassten Schlüsselpunkte (64) dem vorbestimmten Verschiebungswert entspricht.

5. Verfahren nach einem der Ansprüche 1 bis 4, **dadurch gekennzeichnet, dass:**
- der vorbestimmte Verschiebungswert basierend auf dem Durchmesser des zylindrischen Objekts (10) bestimmt wird; oder
- der vorbestimmte Verschiebungswert basierend auf dem minimalen Durchmesser (D) oder dem maximalen Durchmesser (D) oder dem durchschnittlichen Durchmesser (D) des zylindrischen Objekts (10) bestimmt wird; oder
- der vorbestimmte Verschiebungswert basierend auf dem Durchmesser (D) des zylindrischen Objekts (10) derart bestimmt wird, dass der vorbestimmte Verschiebungswert umgekehrt proportional zu dem Durchmesser (D) des zylindrischen Objekts (10) ist.

6. Verfahren nach einem der Ansprüche 1 bis 5, **dadurch gekennzeichnet, dass** der Schritt b) Folgendes umfasst:
- Erzeugen von blickwinkelkorrigierten Bildern des zylindrischen Objekts (10) in den zwei oder mehreren fotografischen Bildern (40, 50, 51, 52, 53, 54) durch Verzerren der zwei oder mehreren fotografischen Bilder (40, 50, 51, 52, 53, 54), wobei die blickwinkelkorrigierten Bilder Frontprojektionsbilder des zylindrischen Objekts (10) senkrecht zu der Zylinderachse (A) darstellen; oder
- Erzeugen von blickwinkelkorrigierten Bildern des zylindrischen Objekts (10) in den zwei oder mehreren fotografischen Bildern (40, 50, 51, 52, 53, 54), wobei das Erzeugen von blickwinkelkorrigierten Bildern des zylindrischen Objekts (10) das Ändern des Blickwinkels durch Verzerren der zwei oder mehreren fotografischen Bilder (40, 50, 51, 52, 53, 54) umfasst, wobei die blickwinkelkorrigierten Bilder Frontprojektionsbilder des zylindrischen Objekts (10) senkrecht zu der Zylinderachse (A) darstellen.

7. Verfahren nach einem der Ansprüche 1 bis 6, **dadurch gekennzeichnet, dass** der Schritt b) Folgendes umfasst:
- Erzeugen von geradlinigen korrigierten Bildern des zylindrischen Objekts (10) in den zwei oder mehreren fotografischen Bildern (40, 50, 51, 52, 53, 54) durch Verzerren der zwei oder mehreren fotografischen Bilder (40, 50, 51, 52, 53, 54), wobei die geradlinigen Projektionsbilder eine geradlinige Projektion des zylindrischen Objekts (10) darstellen; oder
- Erzeugen von geradlinigen korrigierten Bildern des zylindrischen Objekts (10) in den zwei oder mehreren fotografischen Bildern (40, 50, 51, 52, 53, 54), wobei das Erzeugen geradliniger Projektionsbilder des zylindrischen Objekts (10) das Abrollen des zylindrischen Objekts (10) durch Verzerren der zwei oder mehreren fotografischen Bilder (40, 50, 51, 52, 53, 54) umfasst, wobei die geradlinigen Projektionsbilder geradlinige Bilder des zylindrischen Objekts (10) darstellen.

8. Verfahren nach einem der Ansprüche 1 bis 7, **dadurch gekennzeichnet, dass** der Schritt b) Folgendes umfasst:
- Bildzusammenfügen der zwei oder mehreren fotografischen Bilder (40, 50, 51, 52, 53, 54), um das Zielbild (70) zu erzeugen, wobei das Zielbild (70) eine geradlinige Projektion des zylindrischen Objekts (10) um die Zylinderachse (A) darstellt; oder - Bildzusammenfügen der zwei oder mehreren blickwinkelkorrigierten fotografischen Bilder (40, 50, 51, 52, 53, 54), um das Zielbild (70) zu erzeugen, wobei das Zielbild (70) eine geradlinige Projektion des zylindrischen Objekts (10) um die Zylinderachse (A) darstellt; oder
- Bildzusammenfügen der zwei oder mehreren geradlinig korrigierten fotografischen Bilder (40, 50, 51, 52, 53, 54), um das Zielbild (70) zu erzeugen, wobei das Zielbild (70) eine geradlinige Projektion des zylindrischen Objekts (10) um die Zylinderachse (A) darstellt; oder
- Bildzusammenfügen der zwei oder mehreren blickwinkelkorrigierten und geradlinig korrigierten fotografischen Bilder (40, 50, 51, 52, 53, 54), um das Zielbild (70) zu erzeugen, wobei das Zielbild (70) eine geradlinige Projektion des zylindrischen Objekts (10) um die Zylinderachse (A) darstellt.

9. Verfahren nach einem der Ansprüche 1 bis 8, **dadurch gekennzeichnet, dass** der Schritt b) Folgendes umfasst:
- Erfassen eines oder mehrerer Ausrichtungsschlüsselpunkte (63, 64, 65) in den zwei oder mehreren fotografischen Bildern (51, 52, 53, 54);
- Abgleichen entsprechender Ausrichtungsschlüsselpunkte (63, 64, 65) der zwei oder mehreren fotografischen Bilder (51, 52, 53, 54);
- Ausrichten der entsprechenden Ausrichtungsschlüsselpunkte (63, 64, 65) der zwei oder mehreren fotografischen Bilder (51, 52, 53, 54) zueinander; und
- Zusammensetzen der zwei oder mehreren ausgerichteten fotografischen Bilder (40, 50, 51, 52, 53, 54), um das Zielbild (70) zu bilden.

10. Verfahren nach einem der Ansprüche 1 bis 9, **dadurch gekennzeichnet, dass** der Schritt c) Folgendes umfasst:
- Ausrichten des Zielbildes (70) auf das Referenzbild (90) durch Verzerren des Zielbildes (70) und Analysieren des ausgerichteten Zielbildes (70) in Bezug auf das Referenzbild (90); oder
- Ausrichten des Zielbildes (70) auf das Referenzbild (90) durch Verzerren des Zielbildes (70), um es an das Referenzbild (90) anzupassen, und Analysieren des ausgerichteten Zielbildes (70) in Bezug auf das Referenzbild (90);
- Erfassen entsprechender Schlüsselpunkte in dem Zielbild (70) und in dem Referenzbild (90);
- Abgleichen entsprechender Ausrichtungsschlüsselpunkte des Zielbildes (70) und des Referenzbildes (90);
- Ausrichten der entsprechenden Schlüsselpunkte in dem Zielbild (70) und in dem Referenzbild (90) zueinander durch Verzerren des Zielbildes; oder
- Zuordnen und Verriegeln eines Referenzbildrasters (100) auf dem Referenzbild (90);
- Zuordnen und Verriegeln eines Zielbildrasters (110) auf dem Zielbild (70);
und
- Ausrichten des Zielbildes (70) auf das Referenzbild (90) durch Verzerren des Zielbildrasters (110) in Bezug auf das Referenzbildraster (100) zum Ausrichten des Zielbildes (70) auf das Referenzbild (90).

11. Mobiles Endgerät (30), das eine Bildvorrichtung (30), einen oder mehrere Gerätprozessoren (15) und mindestens einen Gerätspeicher (16) zum Speichern von Vorrichtungsanweisungen (17) aufweist, die bei Ausführen durch den oder die mehreren Gerätprozessoren (15) das mobile Endgerät (30) veranlassen zum:
- a) Erheben von zwei oder mehreren fotografischen Bildern (40, 50, 51, 52, 53, 54) eines zylindrischen Objekts (10) aus unterschiedlichen Winkeln um eine Zylinderachse (A) mit der Bildgebungsvorrichtung (32) während Rotation des zylindrischen Objekts (10) und der Bildgebungsvorrichtung (32) relativ zueinander um die Zylinderachse (A) des zylindrischen Objekts (10);
- b) Erzeugen eines Zielbildes (70) aus den zwei oder mehreren fotografischen Bildern (40, 50, 51, 52, 53, 54) durch Bildzusammenfügung;
- c) Analysieren des Zielbildes (70) in Bezug auf ein Referenzbild (90), das ein ursprüngliches zylindrisches Objekt darstellt, und Erzeugen einer Identifizierungsausgabe basierend auf dem Analysieren zum Identifizieren der Authentizität des zylindrischen Objekts (10); und
- d) Erzeugen einer Authentizitätsidentifizierungsangabe basierend auf der Identifizierungsausgabe,
**dadurch gekennzeichnet, dass** die Vorrichtungsanweisungen (17) in Schritt a) konfiguriert sind zum:
- Erheben eines fotografischen Bildes (40, 50, 51, 52, 53, 54) des zylindrischen Objekts (10) aus der Richtung quer zu der Zylinderachse (A) mit der Bildgebungsvorrichtung (30);
- Erfassen eines oder mehrerer Schlüsselpunkte (61, 62, 63, 64, 65) in dem fotografischen Bild (40, 50, 51, 52, 53, 54);
- Verfolgen des einen oder der mehreren erfassten Schlüsselpunkte (61, 62, 63, 64, 65) während der relativen Rotation des zylindrischen Objekts (10) und der Bildgebungsvorrichtung (30) um die Zylinderachse (A) des zylindrischen Objekts (10); und
- Berechnen von Verschiebung des einen oder der mehreren erfassten Schlüsselpunkte (61, 62, 63, 64) aufgrund der relativen Rotation während des Verfolgens; und
- Erheben eines neuen fotografischen Bildes (40, 50, 51, 52, 53, 54) des zylindrischen Objekts (10) automatisch aus der Richtung quer zu der Zylinderachse (A) mit der Bildgebungsvorrichtung (30), wenn die berechnete Verschiebung einem vorbestimmten Verschiebungswert entspricht.

12. Mobiles Endgerät (30) nach Anspruch 11, **dadurch gekennzeichnet, dass** der mindestens eine Gerätspeicher (16) zum Speichern von Vorrichtungsanweisungen (17) konfiguriert ist, die bei Ausführen durch den einen oder die mehreren Gerätprozessoren (15) das mobile Endgerät (30) dazu veranlassen, ein Verfahren nach einem der Ansprüche 1 bis 10 auszuführen.

13. Elektronisches Identifizierungssystem (30, 150), das ein mobiles Endgerät (30) umfasst, das eine Bildgebungsvorrichtung (30), einen oder mehrere Gerätprozessoren (15) und mindestens einen Gerätspeicher (16) zum Speichern von Vorrichtungsanweisungen (17) und ein Identifizierungsserversystem (150) aufweist, das einen oder mehrere Serverprozessoren (152) und mindestens einen Serverspeicher (154), der Serveranweisungen (156) speichert, aufweist, wobei die Vorrichtungsanweisungen (17) und die Serveranweisungen bei Ausführen durch den einen oder die mehreren Prozessoren (15) das mobile Endgerät (30) und das Identifizierungsserversystem (150) veranlassen zum:
- a) Erheben von zwei oder mehreren fotografischen Bildern (40, 50, 51, 52, 53, 54) des zylindrischen Objekts (10) aus unterschiedlichen Winkeln um die Zylinderachse (A) mit einer Bildgebungsvorrichtung (30);
- b) Erzeugen eines Zielbildes (70) aus den zwei oder mehreren fotografischen Bildern (40, 50, 51, 52, 53, 54) durch Bildzusammenfügung;
- c) Analysieren des Zielbildes (70) in Bezug auf ein Referenzbild (90), das ein ursprüngliches zylindrisches Objekt darstellt, und Erzeugen einer Identifizierungsausgabe basierend auf dem Analysieren; und
- d) Erzeugen einer Authentizitätsidentifizierungsangabe basierend auf der Identifizierungsausgabe,
**dadurch gekennzeichnet, dass** die Vorrichtungsanweisungen (17) in Schritt a) konfiguriert sind zum:
- Erheben eines fotografischen Bildes (40, 50, 51, 52, 53, 54) des zylindrischen Objekts (10) aus der Richtung quer zu der Zylinderachse (A) mit der Bildgebungsvorrichtung (30);
- Erfassen eines oder mehrerer Schlüsselpunkte (61, 62, 63, 64, 65) in dem fotografischen Bild (40, 50, 51, 52, 53, 54);
- Verfolgen des einen oder der mehreren erfassten Schlüsselpunkte (61, 62, 63, 64, 65) während der relativen Rotation des zylindrischen Objekts (10) und der Bildgebungsvorrichtung (30) um die Zylinderachse (A) des zylindrischen Objekts (10); und
- Berechnen von Verschiebung des einen oder der mehreren erfassten Schlüsselpunkte (61, 62, 63, 64) aufgrund der relativen Rotation während des Verfolgens; und
- Erheben eines neuen fotografischen Bildes (40, 50, 51, 52, 53, 54) des zylindrischen Objekts (10) automatisch aus der Richtung quer zu der Zylinderachse (A) mit der Bildgebungsvorrichtung (30), wenn die berechnete Verschiebung einem vorbestimmten Verschiebungswert entspricht.

14. Elektronisches Identifizierungssystem (30, 150) nach Anspruch 13, **dadurch gekennzeichnet, dass** der mindestens eine Vorrichtungsspeicher (16) und der mindestens eine Serverspeicher (154) dazu konfiguriert sind, Vorrichtungsanweisungen (17) und Serveranweisungen (156) zu speichern, die, wenn sie von dem einen oder den mehreren Gerätprozessoren (15) und dem einen oder den mehreren Serverprozessoren (152) ausgeführt werden, das elektronische Identifizierungssystem (30, 150) veranlassen, ein Verfahren nach einem der Ansprüche 1 bis 10 auszuführen.

## Revendications

1. Procédé d'identification de l'authenticité d'un objet cylindrique (10) présentant un axe de cylindre (A) à partir d'images photographiques, le procédé comprend la rotation de l'objet cylindrique (10) et du dispositif d'imagerie (32) l'un par rapport à l'autre autour de l'axe de cylindre (A) de l'objet cylindrique (10), et le procédé comprend en outre les étapes suivantes, réalisées par un système d'identification électronique (30, 150) présentant un ou plusieurs processeurs (15, 152) et au moins une mémoire (16, 154) stockant des instructions (17, 156) destinées à être exécutées par les un ou plusieurs processeurs :
- a) l'acquisition de deux images photographiques (40, 50, 51, 52, 53, 54) ou plus de l'objet cylindrique (10) sous différents angles autour de l'axe de cylindre (A) à l'aide d'un dispositif d'imagerie (30) ;
- b) la génération d'une image cible (70) à partir des deux images photographiques (40, 50, 51, 52, 53, 54) ou plus par assemblage d'images ;
- c) l'analyse de l'image cible (70) par rapport à une image de référence (90) représentant un objet cylindrique d'origine et la génération d'une sortie d'identification sur la base de l'analyse ; et
- d) la génération d'une indication d'identification d'authenticité sur la base de la sortie d'identification
**caractérisé en ce que** l'étape a) comprend les étapes suivantes réalisées deux fois ou plus :
- l'acquisition d'une image photographique (40, 50, 51, 52, 53, 54) de l'objet cylindrique (10) à partir de la direction transversale à l'axe de cylindre (A) à l'aide du dispositif d'imagerie (30) ;
- la détection d'un ou plusieurs points clés (61, 62, 63, 64, 65) dans l'image photographique (40, 50, 51, 52, 53, 54) ;
- le suivi des un ou plusieurs points clés détectés (61, 62, 63, 64, 65) pendant la rotation relative de l'objet cylindrique (10) et du dispositif d'imagerie (30) autour de l'axe de cylindre (A) de l'objet cylindrique (10) ; et
- le calcul d'un déplacement des un ou plusieurs points clés détectés (61, 62, 63, 64) en raison de la rotation relative pendant le suivi ; et
- l'acquisition d'une nouvelle image photographique (40, 50, 51, 52, 53, 54) de l'objet cylindrique (10) automatiquement à partir de la direction transversale à l'axe de cylindre (A) à l'aide du dispositif d'imagerie (30) lorsque le déplacement calculé correspond à une valeur de déplacement prédéterminée.

2. Procédé selon la revendication 1, **caractérisé en ce que** l'étape a) comprend :
- l'acquisition des deux images photographiques (40, 50, 51, 52, 53, 54) ou plus de l'objet cylindrique (10) autour de l'axe de cylindre (A) à partir de directions transversales à l'axe de cylindre (A) à l'aide du dispositif d'imagerie (30) tout au long de la rotation de l'objet cylindrique (10) et du dispositif d'imagerie (32) l'un par rapport à l'autre autour de l'axe de cylindre (A) de l'objet cylindrique (10) ; ou
- l'acquisition automatique des deux images photographiques (40, 50, 51, 52, 53, 54) ou plus de l'objet cylindrique (10) autour de l'axe de cylindre (A) à partir de directions transversales à l'axe de cylindre (A) à l'aide du dispositif d'imagerie (30) tout au long de la rotation de l'objet cylindrique (10) et du dispositif d'imagerie (30) l'un par rapport à l'autre autour de l'axe de cylindre (A) de l'objet cylindrique (10).

3. Procédé selon la revendication 1 ou 2, **caractérisé en ce que** l'étape a) comprend :
- a1) l'acquisition d'une première image photographique (40, 51) de l'objet cylindrique (10) à partir de la direction transversale à l'axe de cylindre (A) à l'aide du dispositif d'imagerie (30) ;
- a2) la détection d'un ou plusieurs premiers points clés (61, 62, 63) dans la première image photographique (40, 51) ;
- a3) le suivi des un ou plusieurs premiers points clés détectés (61, 62, 63) pendant la rotation relative de l'objet cylindrique (10) et du dispositif d'imagerie (30) l'un par rapport à l'autre autour de l'axe de cylindre (A) de l'objet cylindrique (10) ; et
- a4) le calcul du déplacement des un ou plusieurs premiers points clés détectés (61, 62, 63) en raison de la rotation relative pendant le suivi ; et
- a5) l'acquisition d'une seconde image photographique (50, 52) de l'objet cylindrique (10) à partir de la direction transversale à l'axe de cylindre (A) à l'aide du dispositif d'imagerie (30) lorsque le déplacement calculé des un ou plusieurs premiers points clés détectés (61, 62, 63) correspond à une valeur de déplacement prédéterminée ; ou
- a1) l'acquisition d'une première image photographique (40, 51) de l'objet cylindrique (10) à partir de la direction transversale à l'axe de cylindre (A) à l'aide du dispositif d'imagerie (30) ;
- a2) la détection d'un ou plusieurs premiers points clés (61, 62, 63) dans la première image photographique (40, 51) ;
- a3) le suivi des un ou plusieurs premiers points clés détectés (61, 62, 63) pendant la rotation relative de l'objet cylindrique (10) et du dispositif d'imagerie (30) l'un par rapport à l'autre autour de l'axe de cylindre (A) de l'objet cylindrique (10) ; et
- a4) le calcul d'un déplacement des un ou plusieurs premiers points clés détectés (61, 62, 63) en raison de la rotation relative pendant le suivi ;
- a5) l'acquisition d'une seconde image photographique (50, 52) de l'objet cylindrique (10) à partir de la direction transversale à l'axe de cylindre (A) à l'aide du dispositif d'imagerie (30) lorsque le déplacement calculé des un ou plusieurs premiers points clés détectés (61, 62, 63) correspond à une valeur de déplacement prédéterminée ; ou
- a6) la détection d'un ou plusieurs seconds points clés (64) dans la seconde image photographique (50, 52) ;
- a7) le suivi des un ou plusieurs seconds points clés détectés (64) pendant la rotation relative de l'objet cylindrique (10) et du dispositif d'imagerie (30) l'un par rapport à l'autre autour de l'axe de cylindre (A) de l'objet cylindrique (10) ; et
- a8) le calcul du déplacement des un ou plusieurs seconds points clés détectés (64) en raison de la rotation relative pendant le suivi ; et
- a9) l'acquisition d'une image photographique ultérieure (53, 54) de l'objet cylindrique (10) à partir de la direction transversale à l'axe de cylindre (A) à l'aide du dispositif d'imagerie (30) lorsque le déplacement calculé des un ou plusieurs seconds points clés détectés (64) correspond à la valeur de déplacement prédéterminée ; ou
- a1) l'acquisition d'une première image photographique (40, 51) de l'objet cylindrique (10) à partir de la direction transversale à l'axe de cylindre (A) à l'aide du dispositif d'imagerie (30) ;
- a2) la détection d'un ou plusieurs premiers points clés (61, 62, 63) dans la première image photographique (40, 51) ;
- a3) le suivi des un ou plusieurs premiers points clés détectés (61, 62, 63) pendant la rotation relative de l'objet cylindrique (10) et du dispositif d'imagerie (30) l'un par rapport à l'autre autour de l'axe de cylindre (A) de l'objet cylindrique (10) ; et
- a4) le calcul du déplacement des un ou plusieurs premiers points clés détectés (61, 62, 63) en raison de la rotation relative pendant le suivi ;
- a5) l'acquisition d'une seconde image photographique (50, 52) de l'objet cylindrique (10) à partir de la direction transversale à l'axe de cylindre (A) à l'aide du dispositif d'imagerie (30) lorsque le déplacement calculé des un ou plusieurs premiers points clés détectés (61, 62, 63) correspond à une valeur de déplacement prédéterminée ; ou
- a6) la détection d'un ou plusieurs seconds points clés (64) dans la seconde image photographique (50, 52) ;
- a7) le suivi des un ou plusieurs seconds points clés détectés (64) pendant la rotation relative de l'objet cylindrique (10) et du dispositif d'imagerie (30) l'un par rapport à l'autre autour de l'axe de cylindre (A) de l'objet cylindrique (10) ; et
- a8) le calcul du déplacement des un ou plusieurs seconds points clés détectés (64) en raison de la rotation relative pendant le suivi ; et
- a9) l'acquisition d'une image photographique ultérieure (53, 54) de l'objet cylindrique (10) à partir de la direction transversale à l'axe de cylindre (A) à l'aide du dispositif d'imagerie (30) lorsque le déplacement calculé des un ou plusieurs seconds points clés détectés (64) correspond à la valeur de déplacement prédéterminée ; et
- a10) la répétition des étapes suivantes une ou plusieurs fois :
- la détection d'un ou plusieurs points clés ultérieurs (64) dans l'image photographique ultérieure (53, 54) ;
- la rotation de l'objet cylindrique (10) et du dispositif d'imagerie (30) l'un par rapport à l'autre autour de l'axe de cylindre (A) de l'objet cylindrique (10) ;
- le suivi des un ou plusieurs points clés détectés ultérieurs (64) pendant la rotation relative de l'objet cylindrique (10) et du dispositif d'imagerie (30) l'un par rapport à l'autre autour de l'axe de cylindre (A) de l'objet cylindrique (10) ; et
- le calcul du déplacement des un ou plusieurs points clés détectés ultérieurs (64) en raison de la rotation relative pendant le suivi ; et
- l'acquisition d'une nouvelle image photographique ultérieure (53, 54) de l'objet cylindrique (10) à partir de la direction transversale à l'axe de cylindre (A) à l'aide du dispositif d'imagerie (30) lorsque le déplacement calculé des un ou plusieurs points clés détectés ultérieurs (64) correspond à la valeur de déplacement prédéterminée.

4. Procédé selon la revendication 1 ou 2, **caractérisé en ce que**
- l'étape a) comprend :
- a11) la détection de bordures latérales (43, 44) de l'objet cylindrique (10) pendant la rotation relative de l'objet cylindrique (10) et du dispositif d'imagerie (30) ;
- a12) l'acquisition d'une première image photographique (40, 51) de l'objet cylindrique (10) à partir de la direction transversale à l'axe de cylindre (A) à l'aide du dispositif d'imagerie (30) ;
- a13) la détection d'un ou plusieurs premiers points clés (61, 62, 63) dans la première image photographique (40, 51) ;
- a14) le suivi des un ou plusieurs premiers points clés détectés (61, 62, 63) pendant la rotation relative de l'objet cylindrique (10) et du dispositif d'imagerie (30) par rapport aux bordures latérales détectées (43, 44) ; et
- a15) le calcul du déplacement des un ou plusieurs premiers points clés détectés (61, 62, 63) par rapport aux bords latéraux détectés (43, 44) de l'objet cylindrique (10) en raison de la rotation relative pendant le suivi ; et
- a16) l'acquisition d'une seconde image photographique (50, 52) de l'objet cylindrique (10) à partir de la direction transversale à l'axe de cylindre (A) à l'aide du dispositif d'imagerie (30) lorsque le déplacement calculé des un ou plusieurs premiers points clés détectés (61, 62, 63) correspond à une valeur de déplacement prédéterminée ; ou
- a11) la détection des bordures latérales (43, 44) de l'objet cylindrique (10) pendant la rotation relative de l'objet cylindrique (10) et du dispositif d'imagerie (30) ;
- a12) l'acquisition d'une première image photographique (40, 51) de l'objet cylindrique (10) à partir de la direction transversale à l'axe de cylindre (A) à l'aide du dispositif d'imagerie (30) ;
- a13) la détection d'un ou plusieurs premiers points clés (61, 62, 63) dans la première image photographique (40, 51) ;
- a14) le suivi des un ou plusieurs premiers points clés détectés (61, 62, 63) pendant la rotation relative de l'objet cylindrique (10) et du dispositif d'imagerie (30) par rapport aux bordures latérales détectées (43, 44) ; et
- a15) le calcul du déplacement des un ou plusieurs premiers points clés détectés (61, 62, 63) par rapport aux bordures latérales détectées (43, 44) de l'objet cylindrique (10) en raison de la rotation relative pendant le suivi ; et
- a16) l'acquisition d'une seconde image photographique (50, 52) de l'objet cylindrique (10) à partir de la direction transversale à l'axe de cylindre (A) à l'aide du dispositif d'imagerie (30) lorsque le déplacement calculé des un ou plusieurs premiers points clés détectés (61, 62, 63) correspond à une valeur de déplacement prédéterminée ;
- a17) la détection d'un ou plusieurs seconds points clés (64) dans la seconde image photographique (50, 52) ;
- a18) le suivi des un ou plusieurs seconds points clés détectés (64) pendant la rotation relative de l'objet cylindrique (10) et du dispositif d'imagerie (30) par rapport aux bordures latérales détectées (43, 44) ; et
- a19) le calcul du déplacement des un ou plusieurs seconds points clés détectés (64) par rapport aux bordures latérale détectées (43, 44) de l'objet cylindrique (10) en raison de la rotation relative pendant le suivi ; et
- a20) l'acquisition d'une image photographique ultérieure (53, 54) de l'objet cylindrique (10) dans la direction transversale à l'axe de cylindre (A) à l'aide du dispositif d'imagerie (30) lorsque le déplacement calculé des un ou plusieurs seconds points clés détectés (64) correspond à la valeur de déplacement prédéterminée ; ou
- a11) la détection des bordures latérales (43, 44) de l'objet cylindrique (10) pendant la rotation relative de l'objet cylindrique (10) et du dispositif d'imagerie (30) ;
- a12) l'acquisition d'une première image photographique (40, 51) de l'objet cylindrique (10) à partir de la direction transversale à l'axe de cylindre (A) à l'aide du dispositif d'imagerie (30) ;
- a13) la détection d'un ou plusieurs premiers points clés (61, 62, 63) dans la première image photographique (40, 51) ;
- a14) le suivi des un ou plusieurs premiers points clés détectés (61, 62, 63) pendant la rotation relative de l'objet cylindrique (10) et du dispositif d'imagerie (30) par rapport aux bordures latérales détectées (43, 44) ; et
- a15) le calcul du déplacement des un ou plusieurs premiers points clés détectés (61, 62, 63) par rapport aux bordures latérales détectées (43, 44) de l'objet cylindrique (10) en raison de la rotation relative pendant le suivi ; et
- a16) l'acquisition d'une seconde image photographique (50, 52) de l'objet cylindrique (10) à partir de la direction transversale à l'axe de cylindre (A) à l'aide du dispositif d'imagerie (30) lorsque le déplacement calculé des un ou plusieurs premiers points clés détectés (61, 62, 63) correspond à une valeur de déplacement prédéterminée ;
- a6) la détection d'un ou plusieurs seconds points clés (64) dans la seconde image photographique (50, 52) ;
- a18) le suivi des un ou plusieurs seconds points clés détectés (64) pendant la rotation relative de l'objet cylindrique (10) et du dispositif d'imagerie (30) par rapport aux bordures latérales détectées (43, 44) ; et
- a19) le calcul du déplacement des un ou plusieurs seconds points clés détectés (64) par rapport aux bordures latérales détectées (43, 44) de l'objet cylindrique (10) en raison de la rotation relative pendant le suivi ; et
- a20) l'acquisition d'une image photographique ultérieure (53, 54) de l'objet cylindrique (10) à partir de la direction transversale à l'axe de cylindre (A) à l'aide du dispositif d'imagerie (30) lorsque le déplacement calculé des un ou plusieurs seconds points clés détectés (64) correspond à la valeur de déplacement prédéterminée ; ou
- a21) la répétition des étapes suivantes une ou plusieurs fois :
- la détection d'un ou plusieurs points clés ultérieurs (64) dans l'image photographique ultérieure (53, 54) ;
- la rotation de l'objet cylindrique (10) et du dispositif d'imagerie (30) l'un par rapport à l'autre autour de l'axe de cylindre (A) de l'objet cylindrique (10) ;
- le suivi des un ou plusieurs points clés détectés ultérieurs (64) pendant la rotation relative de l'objet cylindrique (10) et du dispositif d'imagerie (30) par rapport aux bordures latérales détectées (43, 44) ;
- le calcul du déplacement des un ou plusieurs points clés détectés ultérieurs (64) par rapport aux bordures latérales détectées (43, 44) de l'objet cylindrique (10) en raison de la rotation relative pendant le suivi ; et
- l'acquisition d'une nouvelle image photographique ultérieure (53, 54) de l'objet cylindrique (10) à partir de la direction transversale à l'axe de cylindre (A) à l'aide du dispositif d'imagerie (30) lorsque le déplacement calculé des un ou plusieurs points clés détectés ultérieurs (64) correspond à la valeur de déplacement prédéterminée.

5. Procédé selon l'une quelconque des revendications 1 à 4, **caractérisé en ce que** :
- la valeur de déplacement prédéterminée est déterminée sur la base du diamètre de l'objet cylindrique (10) ; ou
- la valeur de déplacement prédéterminée est déterminée sur la base du diamètre minimum (D), du diamètre maximum (D) ou du diamètre moyen (D) de l'objet cylindrique (10) ; ou
- la valeur de déplacement prédéterminée est déterminée sur la base du diamètre (D) de l'objet cylindrique (10) de telle sorte que la valeur de déplacement prédéterminée soit inversement proportionnelle au diamètre (D) de l'objet cylindrique (10).

6. Procédé selon l'une quelconque des revendications 1 à 5, **caractérisé en ce que** l'étape b) comprend :
- la génération des images corrigées en angle de vue de l'objet cylindrique (10) dans les deux images photographiques (40, 50, 51, 52, 53, 54) ou plus en déformant les deux images photographiques (40, 50, 51, 52, 53, 54) ou plus, les images corrigées en angle de vue représentant des images de projection frontale de l'objet cylindrique (10) perpendiculaires à l'axe de cylindre (A) ; ou
- la génération des images corrigées en angle de vue de l'objet cylindrique (10) dans les deux images photographiques (40, 50, 51, 52, 53, 54) ou plus, la génération d'images corrigées en angle de vue de l'objet cylindrique (10) comprend une modification de l'angle de vue en déformant les deux images photographiques (40, 50, 51, 52, 53, 54) ou plus, les images corrigées en angle de vue représentant des images de projection frontale de l'objet cylindrique (10) perpendiculaires à l'axe de cylindre (A).

7. Procédé selon l'une quelconque des revendications 1 à 6, **caractérisé en ce que** l'étape b) comprend :
- la génération des images corrigées rectilignes de l'objet cylindrique (10) dans les deux images photographiques (40, 50, 51, 52, 53, 54) ou plus, en déformant les deux images photographiques (40, 50, 51, 52, 53, 54) ou plus, les images de projection rectiligne représentant la projection rectiligne de l'objet cylindrique (10) ; ou
- la génération des images corrigées rectilignes de l'objet cylindrique (10) dans les deux images photographiques (40, 50, 51, 52, 53, 54) ou plus, la génération des images de projection rectiligne de l'objet cylindrique (10) comprend le déroulement de l'objet cylindrique (10) en déformant les deux images photographiques (40, 50, 51, 52, 53, 54) ou plus, les images de projection rectiligne représentant des images rectilignes de l'objet cylindrique (10).

8. Procédé selon l'une quelconque des revendications 1 à 7, **caractérisé en ce que** l'étape b) comprend :
- l'assemblage d'images des deux images photographiques (40, 50, 51, 52, 53, 54) ou plus pour générer l'image cible (70), l'image cible (70) représentant la projection rectiligne de l'objet cylindrique (10) autour de l'axe de cylindre (A) ; ou - l'assemblage d'images des deux images photographiques corrigées en angle de vue (40, 50, 51, 52, 53, 54) ou plus pour générer l'image cible (70), l'image cible (70) représentant la projection rectiligne de l'objet cylindrique (10) autour de l'axe de cylindre (A) ; ou
- l'assemblage d'images des deux images photographiques corrigées rectilignes (40, 50, 51, 52, 53, 54) ou plus pour générer l'image cible (70), l'image cible (70) représentant la projection rectiligne de l'objet cylindrique (10) autour de l'axe de cylindre (A) ; ou
- l'assemblage d'images des deux images photographiques corrigées en angle de vue et corrigées rectilignes (40, 50, 51, 52, 53, 54) ou plus pour générer l'image cible (70), l'image cible (70) représentant la projection rectiligne de l'objet cylindrique (10) autour de l'axe de cylindre (A) ; ou

9. Procédé selon l'une quelconque des revendications 1 à 8, **caractérisé en ce que** l'étape b) comprend :
- la détection d'un ou plusieurs points clés d'alignement (63, 64, 65) dans les deux images photographiques (51, 52, 53, 54) ou plus ;
- la mise en correspondance des points clés d'alignement correspondants (63, 64, 65) des deux images photographiques (51, 52, 53, 54) ou plus ;
- l'alignement des points clés d'alignement correspondants (63, 64, 65) des deux images photographiques (51, 52, 53, 54) ou plus les uns par rapport aux autres ; et
- la composition des deux images photographiques alignées (40, 50, 51, 52, 53, 54) ou plus, respectivement, pour former l'image cible (70).

10. Procédé selon l'une quelconque des revendications 1 à 9, **caractérisé en ce que** l'étape c) comprend :
- l'alignement de l'image cible (70) sur l'image de référence (90) en déformant l'image cible (70), et l'analyse de l'image cible alignée (70) par rapport à l'image de référence (90) ; ou
- l'alignement de l'image cible (70) sur l'image de référence (90) en déformant l'image cible (70) pour qu'elle corresponde à l'image de référence (90), et l'analyse de l'image cible alignée (70) par rapport à l'image de référence (90) ;
- la détection des points clés correspondants dans l'image cible (70) et dans l'image de référence (90) ;
- la mise en correspondance des points clés d'alignement correspondants de l'image cible (70) et de l'image de référence (90) ;
- l'alignement des points clés correspondants dans l'image cible (70) et dans l'image de référence (90) les uns par rapport aux autres en déformant l'image cible ; ou
- l'association et le verrouillage d'une grille d'image de référence (100) sur l'image de référence (90) ;
- l'association et le verrouillage d'une grille d'image cible (110) sur l'image cible (70) ; et
- l'alignement de l'image cible (70) sur l'image de référence (90) en déformant la grille d'image cible (110) par rapport à la grille d'image de référence (100) pour aligner l'image cible (70) sur l'image de référence (90).

11. Dispositif utilisateur mobile (30) présentant un dispositif d'imagerie (30), un ou plusieurs processeurs de dispositif (15) et au moins une mémoire de dispositif (16) pour stocker des instructions de dispositif (17) qui, lorsqu'elles sont exécutées par les un ou plusieurs processeurs de dispositif (15), amènent le dispositif utilisateur mobile (30) à :
- a) acquérir deux images photographiques (40, 50, 51, 52, 53, 54) ou plus d'un objet cylindrique (10) sous différents angles autour d'un axe de cylindre (A) à l'aide du dispositif d'imagerie (32) pendant la rotation de l'objet cylindrique (10) et du dispositif d'imagerie (32) l'un par rapport à l'autre autour de l'axe de cylindre (A) de l'objet cylindrique (10) ;
- b) générer une image cible (70) à partir des deux images photographiques (40, 50, 51, 52, 53, 54) ou plus par assemblage d'images ;
- c) analyser l'image cible (70) par rapport à une image de référence (90) représentant un objet cylindrique d'origine et générer une sortie d'identification sur la base de l'analyse pour identifier l'authenticité de l'objet cylindrique (10) ; et
- d) générer une indication d'identification d'authenticité sur la base de la sortie d'identification
**caractérisé en ce que** les instructions de dispositif (17) sont configurées à l'étape a) pour :
- acquérir une image photographique (40, 50, 51, 52, 53, 54) de l'objet cylindrique (10) à partir de la direction transversale à l'axe de cylindre (A) à l'aide du dispositif d'imagerie (30) ;
- détecter un ou plusieurs points clés (61, 62, 63, 64, 65) dans l'image photographique (40, 50, 51, 52, 53, 54) ;
- suivre les un ou plusieurs points clés détectés (61, 62, 63, 64, 65) pendant la rotation relative de l'objet cylindrique (10) et du dispositif d'imagerie (30) autour de l'axe de cylindre (A) de l'objet cylindrique (10) ; et
- calculer un déplacement des un ou plusieurs points clés détectés (61, 62, 63, 64) en raison de la rotation relative pendant le suivi ; et
- acquérir une nouvelle image photographique (40, 50, 51, 52, 53, 54) de l'objet cylindrique (10) automatiquement à partir de la direction transversale à l'axe de cylindre (A) à l'aide du dispositif d'imagerie (30) lorsque le déplacement calculé correspond à une valeur de déplacement prédéterminée.

12. Dispositif utilisateur mobile (30) selon la revendication 11, **caractérisé en ce que** la au moins une mémoire de dispositif (16) est configurée pour stocker des instructions de dispositif (17) qui, lorsqu'elles sont exécutées par les un ou plusieurs processeurs de dispositif (15), amènent le dispositif utilisateur mobile (30) à exécuter un procédé selon l'une quelconque des revendications 1 à 10.

13. Système d'identification électronique (30, 150) comprenant un dispositif utilisateur mobile (30) présentant un dispositif d'imagerie (30), un ou plusieurs processeurs (15) et au moins une mémoire de dispositif (16) destinée à stocker des instructions (17) et un système serveur d'identification (150) présentant un ou plusieurs processeurs de serveur (152) et au moins une mémoire (154) stockant des instructions de serveur (156), les instructions de dispositif (17) et les instructions de serveur, lorsqu'elles sont exécutées par les un ou plusieurs processeurs (15), amenant le dispositif utilisateur mobile (30) et le système de serveur d'identification (150) à :
- a) acquérir deux images photographiques (40, 50, 51, 52, 53, 54) ou plus de l'objet cylindrique (10) sous différents angles autour de l'axe de cylindre (A) à l'aide d'un dispositif d'imagerie (30) ;
- b) générer une image cible (70) à partir des deux images photographiques (40, 50, 51, 52, 53, 54) ou plus par assemblage d'images ;
- c) analyser l'image cible (70) par rapport à une image de référence (90) représentant un objet cylindrique d'origine et générer une sortie d'identification sur la base de l'analyse ; et
- d) générer une indication d'identification d'authenticité sur la base de la sortie d'identification
**caractérisé en ce que** les instructions du dispositif (17) sont configurées à l'étape a) pour :
- acquérir une image photographique (40, 50, 51, 52, 53, 54) de l'objet cylindrique (10) à partir de la direction transversale à l'axe de cylindre (A) à l'aide du dispositif d'imagerie (30) ;
- détecter un ou plusieurs points clés (61, 62, 63, 64, 65) dans l'image photographique (40, 50, 51, 52, 53, 54) ;
- suivre les un ou plusieurs points clés détectés (61, 62, 63, 64, 65) pendant la rotation relative de l'objet cylindrique (10) et du dispositif d'imagerie (30) autour de l'axe de cylindre (A) de l'objet cylindrique (10) ; et
- calculer un déplacement des un ou plusieurs points clés détectés (61, 62, 63, 64) en raison de la rotation relative pendant le suivi ; et
- acquérir une nouvelle image photographique (40, 50, 51, 52, 53, 54) de l'objet cylindrique (10) automatiquement à partir de la direction transversale à l'axe de cylindre (A) à l'aide du dispositif d'imagerie (30) lorsque le déplacement calculé correspond à une valeur de déplacement prédéterminée.

14. Système d'identification électronique (30, 150) selon la revendication 13, **caractérisé en ce que** la au moins une mémoire de dispositif (16) et la au moins une mémoires de serveur (154) sont configurées pour stocker des instructions de dispositif (17) et des instructions de serveur (156) qui, lorsqu'elles sont exécutées par les un ou plusieurs processeurs de dispositif (15) et les un ou plusieurs processeurs de serveur (152), amènent le système d'identification électronique (30, 150) à mettre en œuvre un procédé selon l'une quelconque des revendications 1 à 10.
